# EUROPEAN PATENT APPLICATION

(11) **EP 1 524 864 A1**
(43) Date of publication of application: **20.04.2005**
(21) Application number: 03023439.7
(22) Date of filing: 17.10.2003
(51) Int. Cl.: H04N 13/00

(54) **Turntable system for photographing three-dimensional objects**

(71) Applicant: CANON EUROPA N.V., NL-1185 XB Amstelveen (NL); Canon Giessen GmbH, D-35394 Giessen (DE)
(72) Inventor: Matsumura, Koichi, Bershire, RG12 2DZ (GB); Henkel, Dirk, Ing., 35435 Wettenberg (DE)
(74) Representative: Weser, Wolfgang, Dr. Dipl.-Phys.

(57) **Abstract**

The invention relates to a photographing apparatus. It comprises a turntable on which an object to be photographed is set. The turntable has thereon one or more marks indicating its orientation, a drive for rotating the turntable, a controller connected to signal the drive to rotate the turntable to particular orientations, and a sensor connected to indicate to the controller, in response to the one or more marks on the turntable, the position of the turntable. The controller is arranged to calibrate the orientations of the turntable produced by the drive, by noting occurrence of the one or more marks as indicated by the sensor in relation to signals corresponding to the movement of the drive, and is further arranged to rotate the turntable to particular selected orientations by issuing signals to the drive calculated in accordance with the said noted relation.

## Description

This invention relates to a photographic apparatus, and in particular to calibration of the turntable on which the object to be photographed is set.

Recently, technologies generating a three-dimensional model of an object from a plurality of two-dimensional images taken from a plurality of positions and/or orientations have been developed. In prior art devices, it is known to determine the silhouettes of a number of photographed images of the device and to use those silhouettes to generate a three-dimensional model of the object, the model consisting of a number of polygons. Photographed images are used to generate textures for application to each polygon of the three-dimensional images to generate the final model of the object.

Technologies to display such three-dimensional models using an internet browser and to manipulate the view of model, for example by rotating the model, have also been developed.
Using these technologies to make three-dimensional models observable through the internet browser, it becomes possible for electronic commerce (E-Commerce) customers to observe merchandise as three-dimensional objects. Thus, it is expected that such three-dimensional object modelling technologies will greatly contribute to the advancement of E-Commerce businesses.

The methods known from the prior art generally require the kind of specialist equipment normally found in a photographic studio for photographing the objects. For example, the lighting conditions and backgrounds for each of the photographs must be arranged so as to be able to take both textural and silhouette images effectively. This is significantly complicated by the need to take images from a number of positions and orientations. Furthermore, the accuracy of the final three-dimensional model is dependent to a large extent on the positions from which the two-dimensional images are taken. Thus, the photographer must be sufficiently skilled in generating three-dimensional images to determine where the two-dimensional images should be taken from.

A known means for extracting the silhouette of an object is to take an image of the background of the object and the table (an "object-setting surface") without the object and then take an image including all of the background, the object-setting surface and the object. After these photographs have been taken, a difference between images can be determined to obtain a silhouette.

When silhouette information is obtained by using the techniques described above, a user has to manually change the background and object-setting surface or has to set and remove the object manually. Therefore, it is impossible to complete all photographs without a manual operation by the user. Accordingly, using these techniques, it is not possible to provide a three-dimensional modelling system that is fully automatic and in which the user operation is relatively straightforward.

By not only photographing lateral images but also top and bottom images of the object, it is possible to create a three-dimensional model observable from all orientations. However, in order to take photographic images from below the object, it is necessary for an operator to invert the object so that the bottom of the object can be photographed. Inverting the object also causes another adjustment between the image of the bottom and other pre-photographed images to be necessary, since the picture shooting distance for photographing the bottom is normally slightly different from the one for photographing other images. An operator must then adjust the size and orientation of these images by using computer programs. This adds to both the workload and operating skill required of the operator and also adds to the time it takes to create a three-dimensional model of an object.

There are a number of problems associated with the methods described above. For example, the known three-dimensional modelling systems generally required skilled operators, both in terms of the photographic skills required and the judgement of where to take images from in order to obtain a good three-dimensional image. Preparing all the required silhouettes is crucial to the quality of the final model. Getting the lighting right to remove shadows, setting up the camera, and getting the background and stand conditions correct results in a process that is both skilful and laborious.

In the known methods mentioned above, it takes a long time to take a small number of images. As a result, the number of images that can realistically be taken is often limited owing to the time available. This reduces the quality of the final three-dimensional images and adds the importance of the skill and experience of the operators. Consider, for example, a cylinder. Taking six images, from six different locations, will result in the cylinder being modelled as a six-sided object; taking twenty images will give a more accurate twenty-sided model. More complicated shapes lead to further problems for the operator to consider.

There are also a number of problems associated with the table on which an object to be modelled is placed. In some prior art devices, the table is supported by a frame. The table may be a turntable and may include a turning mechanism as part of the frame. A spindle may be included to assist with the rotation of the turntable. All such support means and turning mechanisms are visible in the image taken by the image capturing device which can cause complications to the processing of the image.

In order to create an entire visual hull, it is necessary to capture silhouette image from various longitudinal and latitudinal orientations in respect of the object. A backlight unit needs to be placed behind the target object with respect to image capturing device so that image frame of the camera covers the entire target object with certain amount of border to detect entire silhouette. A problem with such a system is that the mechanical requirements of the system tend to lead to the system being large.

The present invention seeks to overcome at least some of the problems identified above.

The present invention provides a photographing apparatus comprising:
a turntable on which an object to be photographed is set, the turntable having thereon one or more marks indicating its orientation,
a drive for rotating the turntable,
a controller connected to signal the drive to rotate the turntable to particular orientations, and
a sensor connected to indicate to the controller, in response to the one or more marks on the turntable, the position of the turntable,
wherein the controller is arranged to calibrate the orientations of the turntable produced by the drive, by issuing signals to the drive to rotate the turntable, and to note occurrence of the one or more marks as indicated by the sensor in relation to the said signals issued, and
the controller is arranged to rotate the turntable to particular selected orientations by issuing signals to the drive calculated in accordance with the said noted relation.

The one or more marks may be visible. The sensor may detect the marks optically.

The turntable may have exactly one mark to which the sensor responds to indicate the position of the turntable. A single mark is convenient since it reduces to a minimum the number of marks that might appear in the images taken of the object, which are at least are aesthetically unpleasing but also, in the case of 3D modelling, may cause an error in the final 3D model produced.

The drive may comprise a stepper motor. Further the controller, when calibrating, may be arranged to note the number of motor steps between marks, and if the turntable has exactly one mark to which the sensor responds to indicate the position of the turntable, the controller, when calibrating, may be arranged to note the number of motor steps required to rotate the turntable a whole number of rotations as indicated by the occurrence of that mark.

Also if the motor comprises a stepper motor and the controller, when calibrating, is arranged to note the number of motor steps between marks, the controller, when rotating the turntable to a particular orientation, may signal the motor to step a number of times that is a multiple or fraction of the noted number of motor steps between marks.

The drive may comprise a drive wheel which engages the turntable by friction. The drive wheel may engage the rim of the turntable. At least the portion of the wheel that engages the turntable may be made of a resilient material. A wheel of a resilient material, such as rubber or resilient polymers, provide a simple way of engaging the turntable but are prone to some slip, which the invention allows for. They also wear, changing the amount they turn the turntable per rotation of the wheel, bit again the invention allows for this.

The turntable may transparent.

The photographing apparatus may be arranged to provide from the photographs of the object a three dimensional model of the object.

The controller may be arranged to bring the turntable to rest at the said selected orientations. At least one of the selected orientations may be one not indicated by a said mark. The controller may be arranged to control a camera to take an image of the object on the turntable when the turntable is at a said desired orientation.

The controller may be arranged to perform the said calibration of the turntable after each object to be photographed is placed on the turntable. This allows for changes to the calibration caused by the weight of the object.

By way of example only, embodiments of the present invention will now be described with reference to the accompanying drawings, of which:
Figure 1 is a diagrammatic view of an enclosure housing a photographic apparatus;
Figure 2 is an isometric view of a photographic apparatus, viewed from a first direction;
Figure 3 is an isometric view of a photographic apparatus, viewed from a second direction;
Figure 4 is a diagrammatic view of a support wheel arrangement for use with the photographic apparatus;
Figure 4A is an exploded view of the support wheel arrangement of Figure 4;
Figure 5 is a diagrammatic view of a drive wheel arrangement for use with the photographic apparatus;
Figure 6 is a diagrammatic view of an arm drive arrangement for use with the photographic apparatus;
Figure 7 is a side view of a photographic apparatus;
Figure 8 is a plan view of a photographic apparatus;
Figure 9 is a side view of a photographic apparatus with the camera arm in a horizontal position;
Figure 10 is a side view of a photographic apparatus with the camera arm in a first position above the horizontal;
Figure 11 is a side view of a photographic apparatus with the camera arm in a second position above the horizontal;
Figure 12 is a side view of a photographic apparatus with the camera arm in a position below the horizontal;
Figure 13 is a simplified side view of a photographic apparatus with the camera located 45 degrees above the horizontal;
Figure 14 is a simplified side view of a photographic apparatus with the camera located 80 degrees above the horizontal;
Figure 15 is a simplified side view of a photographic apparatus with the camera located 10 degrees above the horizontal;
Figure 16 is a simplified side view of a photographic apparatus with the camera located 70 degrees below the horizontal;
Figure 17 is a simplified side view of a photographic apparatus with the camera located 45 degrees above the horizontal;
Figure 18 is a simplified side view of a photographic apparatus with the camera located 80 degrees above the horizontal;
Figure 19 is a simplified side view of a photographic apparatus with the camera located 10 degrees above the horizontal;
Figure 20 is a simplified side view of a photographic apparatus with the camera located 70 degrees below the horizontal;
Figure 21 is a simplified side view of a photographic apparatus with the camera located 45 degrees above the horizontal;
Figure 22 is a simplified side view of a photographic apparatus with the camera located 80 degrees above the horizontal;
Figure 23 is a simplified side view of a photographic apparatus with the camera located 10 degrees above the horizontal;
Figure 24 is a simplified side view of a photographic apparatus with the camera located 70 degrees below the horizontal;
Figure 25 is a simplified side view of a photographic apparatus with the camera located 45 degrees above the horizontal;
Figure 26 is a simplified side view of a photographic apparatus with the camera located 80 degrees above the horizontal;
Figure 27 is a simplified side view of a photographic apparatus with the camera located 10 degrees above the horizontal;
Figure 28 is a simplified side view of a photographic apparatus with the camera located 70 degrees below the horizontal;
Figure 29 is a side view of a photographic apparatus in accordance with an alternative embodiment;
Figure 30 shows a large calibration mat for use with the photographic apparatus;
Figure 31 shows a small calibration mat for use with the photographic apparatus;
Figure 32 shows a block diagram of a three-dimensional modelling system;
Figure 33 is a first part of a flow chart detailing the operation of a program in accordance with the present invention;
Figure 34 is a second part of the flow chart of Figure 33;
Figure 35 is a flow chart of an initialise subroutine for use with the present invention;
Figure 36 is a flow chart of a camera calibration subroutine for use with the present invention;
Figure 37 is a flow chart of a turntable calibration subroutine for use with the present invention;
Figure 38 is a flow chart of a turntable rotation subroutine for use with the present invention;
Figure 39 is a flow chart of a mirror tilting subroutine;
Figure 40 shows a table of camera arm position parameters;
Figure 41 shows a table of camera exposure parameters;
Figure 42 shows a table of zoom position parameters;
Figure 43 shows a table of mirror tilt parameters;
Figure 44 shows a table of lighting control parameters;

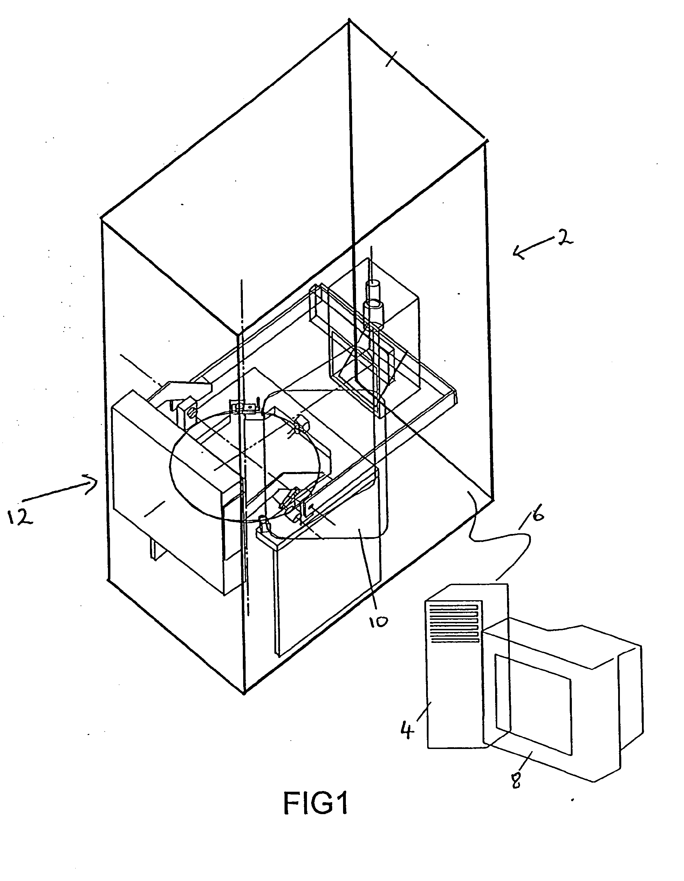

Figure 1 shows an enclosure, indicated generally by the reference numeral 2, for a photographic apparatus 12. The photographic apparatus 12 is connected to a computer 4 by a cable 6. The computer 4 is shown attached to a monitor 8. A keyboard and/or a mouse (not shown) or any other data input and human interface devices may be provided to enable an operator to control the apparatus of the present invention.

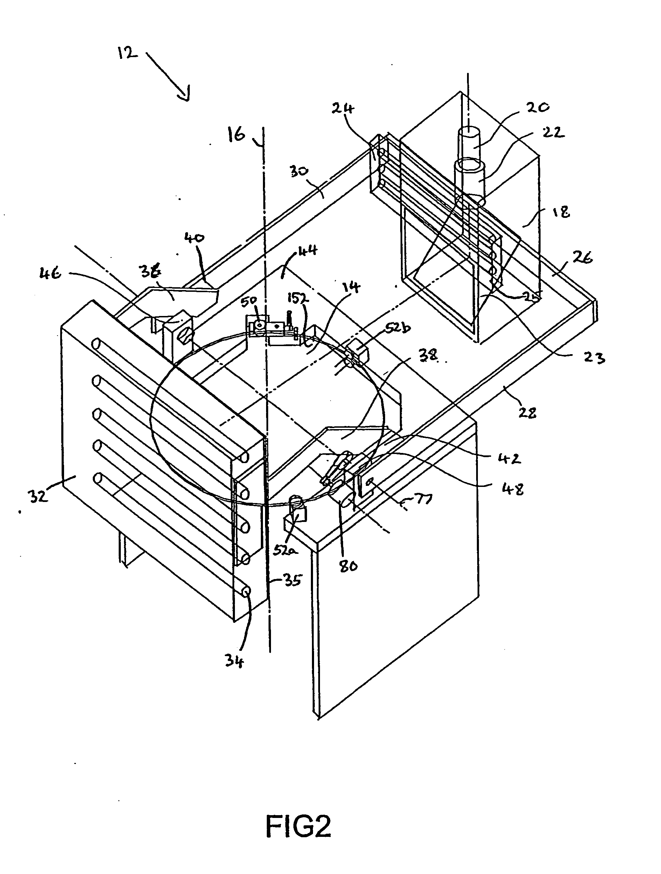

The enclosure 2 includes a door 10 that is shown in an open position in Figure 1. The door 10 allows access to the interior of the enclosure 2. The interior of the enclosure 2 contains a photographic apparatus, indicated generally by the reference numeral 12. The photographic apparatus 12 is described below with reference to Figures 2 to 28.

Photographic apparatus 12 includes a glass turntable 14 on which an object to be photographed can be placed. The glass turntable is rotatable about a central vertical axis 16 to enable an object placed on the turntable 14 to be photographed from many angles. A camera unit 18 is provided to take photographic images of an object on the turntable 14. The camera unit 18 comprises a camera 20, a zoom lens 22 and a mirror 23 with a tilting mechanical stage 23a. The zoom position of the zoom lens 22 is electrically controllable. Detailed description of suitable controlling mechanisms for such a zoom lens are omitted from the present description since they do not relate directly to the present invention and suitable implementations are well know to persons skilled in the art.

A front fluorescent light unit 24 is provided on the camera unit 18 and a diffusion panel 25 is provided in front of the front fluorescent light unit to diffuse the light from front fluorescent light unit 24, to reduce glare from the light unit, for example. The front fluorescent light unit 24 is used to provide appropriate lighting to enable the camera 20 to take photographs of an object placed on the turntable 14 for the generation of textural data for use by the three dimensional modelling software. The camera unit 18 is mounted on a central camera arm 26. Central camera arm 26 extends from a left camera arm 28 to a right camera arm 30.

A backlight unit 32 comprising rear fluorescent light tubes 34 having a diffusion panel 35 in front of the rear fluorescent light tubes is provided. The backlight unit 32 is positioned such that an object placed on the turntable 14 is located between the backlight unit 32 and the camera unit 18. The backlight unit 32 is illuminated when the camera unit 18 is being used to capture a silhouette image of an object placed on the turntable 14.

The backlight unit 32 is mounted between a right backlight arm 36 and a left backlight arm 38. The right backlight arm 36 is connected to the right camera arm 30 by a right arm joint 40. The left backlight arm 38 is connected to the left camera arm 28 by a left arm joint 42.

Polarising filters (not shown) having dimensions similar to the diffusion panels 25 and 35 may be provided for the front fluorescent light unit 24 and the backlight unit 32 and for the image capturing camera 20. By setting the polarisation angle of the polarisation filters approximately at right angles to one another, the effect of reflected light from the diffusion panels 25 and 35 can be reduced.

It should be noted that whilst the front light unit 24 and backlight unit 32 are described herein as fluorescent light units, other types of lights, such as flashlights and/or tungsten lights may be used.

A frame 44 is provided to support the elements that support the turntable 14 (described further below). Further, a right arm pillar 46 extends from the support frame 44 to the right camera arm 30 to support the right camera arm and the right backlight arm 36. In a similar manner, a left arm pillar 48 extends from the support frame 44 to the left camera arm 28 to support the left camera arm and the left backlight arm 38.

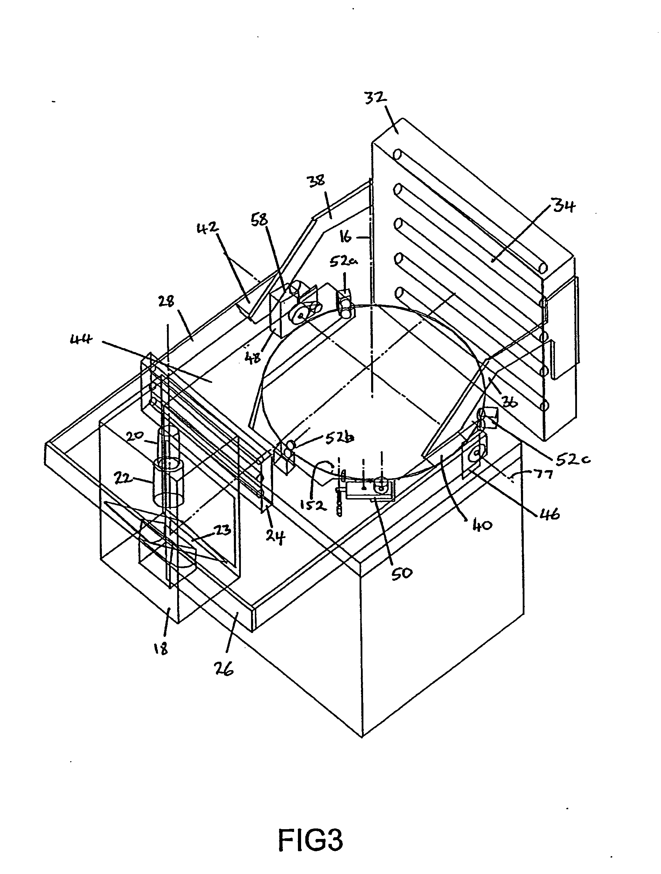

The turntable support frame 44 includes a drive wheel arrangement indicated generally by the reference numeral 50, a first support wheel arrangement indicated generally by the reference numeral 52a, a second support wheel arrangement indicated generally by the reference numeral 52b and a third support wheel arrangement indicated generally by the reference numeral 52c, which is shown in Fig.3. The support wheel arrangements 52a, 52b and 52c are provided to support to the glass turntable 14. The drive wheel arrangement 50 supports the turntable and is also provided to rotate the turntable as required.

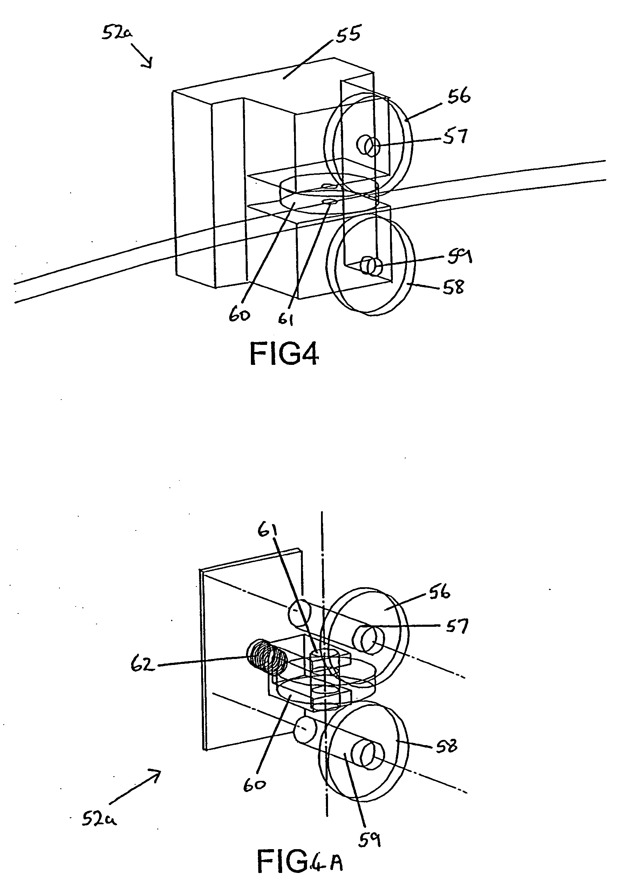

The first support wheel arrangement 52a is best seen in Figures 4 and 4A. Figure 4 shows the support wheel arrangement 52a being used to drive the turntable 14. For clarity, only the edge of the glass turntable 14 is shown. In Figure 4A, the first support wheel arrangement 52a is shown in exploded form.

The first support wheel arrangement 52a includes a support 55, an upper roller 56, a lower roller 58 and a side roller 60.
As shown in Figure 4, the support wheel arrangement 52a is positioned so that the glass turntable 14 is positioned between the upper and lower rollers 56, 58. As shown in Figure 4A, a spring 62 is used to urge the side roller 60 towards the glass turntable 14. By urging the side roller 60 into contact with the edge of the turntable 14 and positioning the upper and lower rollers 56, 58 so that they are in contact with the turntable 14, the support wheel arrangement 52 supports the turntable 14. Upper, lower and side rollers 56, 58 and 60 respectively rotate about spindles 57, 59 and 61 as the glass turntable 14 is rotated.

The second and third support wheel arrangement 52b and 52c support the glass turntable 14 in a similar manner.

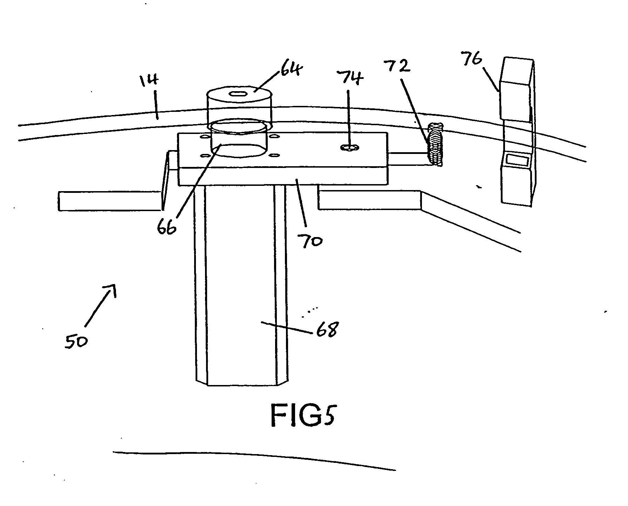

The drive wheel arrangement 50 is shown in Figure 5. The drive wheel arrangement 50 comprises a side roller 64 attached to a spindle 66. The side roller 64 is driven by stepping motor 68 via the spindle 66. The spindle 66 is supported by a support plate 70. The support plate 70 is attached at one end to a spring 72. Spring 72 has one end attached to the glass turntable 14 and another end attached to the support plate 70 and is biased to urge the end of the support plate to which the spring is connected away from the rim of the glass turntable 14. The support plate 70 is pivotally mounted about a pivot point 74. When the end of the support plate 70 that is attached to the spring 72 is urged away from the rim of the turntable 14, the support plate pivots about point 74 such that the other end of the support plate 70 (including the side roller 64) is urged into contact with the rim of the glass turntable 14. The side roller 64 is urged into contact with the rim of the glass turntable 14 and is used to turn the glass turntable under the control of the stepping motor 68. Clearly, the drive wheel arrangement 50 shown in Figure 5 is only one example of many driving means that could be used to drive the turntable 14.

A photodetector device 76 is also shown in Figure 5. The photodetector device 76 can be use to detect marks on the glass turntable 14 (not shown in Figure 5). Such marks can be used to control the operation of the stepping motor 68 so as to control the rotation of the turntable 14, as described below. For example, a single mark may be used to indicate a start point for rotations of the turntable. When the start point is detected again, the turntable has moved through one complete revolution. The mark(s) may be composed of a thin film of evaporated aluminium or thin material located at the edge of the turntable.

As shown in Figures 2 and 3, each camera arm (camera arm left 28 and camera arm right 30) is attached to the corresponding backlight arm (backlight arm left 38 and backlight arm right 36 respectively) via an arm joint (left arm joint 42 and right arm joint 40 respectively). The camera arms and the backlight arms are held at a fixed position with respect to one another by the arm joints, but those arms can be rotated relative to the glass turntable about an axis of rotation 77. As shown in Figure 3, the support frame 44 is formed with one side cleared and is rigid enough to support glass turntable 14 with support wheel arrangements 52a, 52b and 52c.

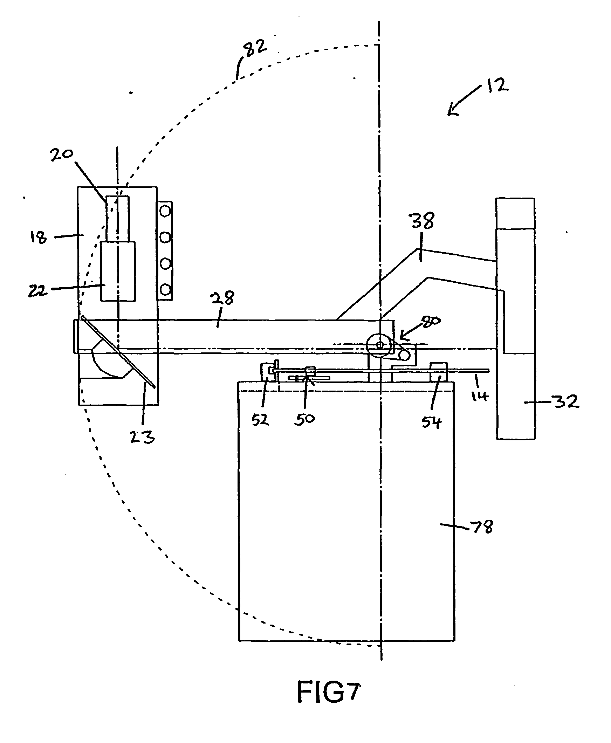

Figure 7 shows a side view of a photographic apparatus 12 in accordance with the present invention in which the camera unit 18, left camera arm 28, left backlight arm 38 and backlight unit 32 are visible.

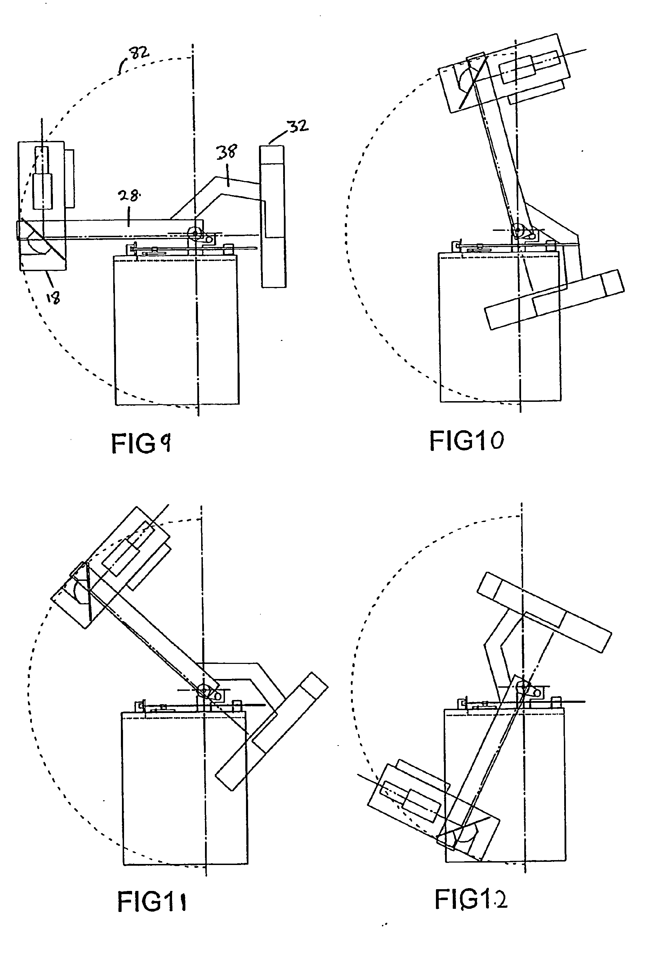

As noted above, the camera arms and the backlight arms are held at fixed positions with respect to one another, but those arms can be rotated together relative to the glass turntable. The arms are driven by arm drive 80. When driven by arm drive 80, the camera unit 18 moves in an arc indicated in Figure 7 by the dotted line 82. The centre of rotation of the arc 82 is the axis 77. The backlight 32 moves in a similar arc, not shown in Figure 7, but shown, for example, in Figures 9 to 12.

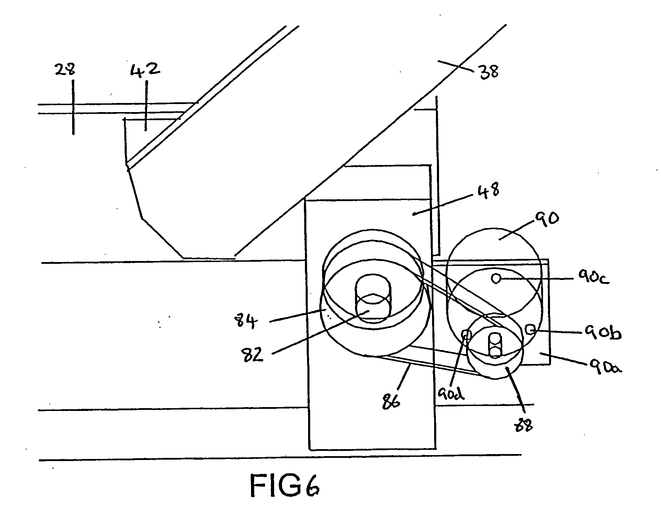

Figure 6 shows left camera arm 28 and left backlight arm 38 connected by left arm joint 42, and left arm pillar 48. Also shown in Figure 6 is an arm drive, indicated generally by the reference numeral 80, to drive the left camera arm 28 (and also the right camera arm 30).

Left arm pillar 48 is penetrated by a spindle 82 carrying a gear 84. Gear 84 (and hence spindle 82) is driven by a toothed belt 86. Belt 86 extends around roller 84 and a smaller gear 88. Gear 88 is driven by stepping motor 90. Stepping motor 90 drives roller 88, which, via toothed belt 86 and gear 84, drives spindle 82. The stepping motor 90 is secured with a plate 90a which is attached to the left pillar 48 by three screws 90b, 90c, and 90d. Spindle 82 is connected to the camera arm 28 and operates to rotate both the camera arm 28 and the backlight arm 38 (as well as right camera arm 30 and right backlight arm 36). The axis of rotation 77 passes through the centre of the spindle 82.

Of course, the arm drive 80 shown in Figure 6 is only one example of many arm drive arrangements that could be used to rotate the camera and backlight arms.

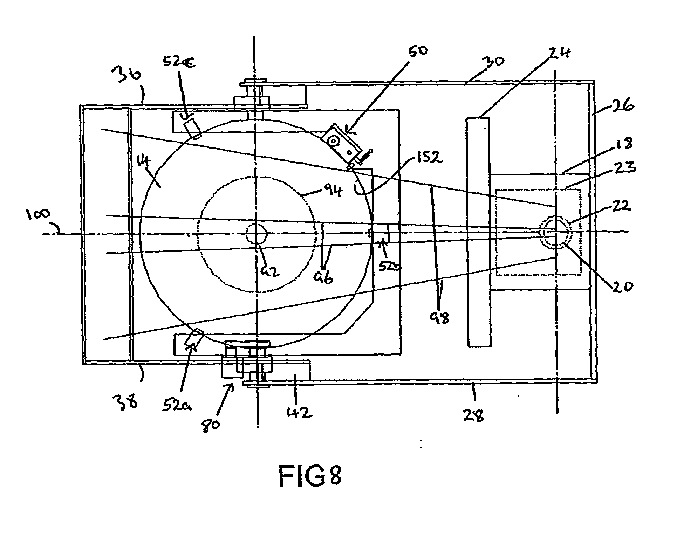

Figure 8 shows a plan view of a photographic apparatus 12 in accordance with the present invention. Figure 8 also shows the target area both for a small object, which is represented by a dotted line 92, and for a large object, which is representing in a dotted line 94, when placed on the turntable 14. A line 100 is shown extending from the camera unit 18 through the centre of the object target areas 92 and 94. The line 100 represents the optical axis of the camera 20. The optical axis 100 extends from the camera 20 and is deflected by the mirror 23. Lines 96 and 98 respectively show the extremities of an optical horizontal view for the small object 92 and the large object 94. An optical view is the area visible to the digital camera 20 and extends a distance either side of the optical axis 100. The optical views 96 and 98 show ideal optical horizontal views for the objects shown in the sense that the objects almost cover the respective optical views with some boundary space and are positioned in the centre of the optical views.

As described above, the glass turntable 14 is supported by support wheel arrangements 52a, 52b and 52c and is driven by drive wheel arrangement 50. The support wheel arrangements 52a, 52b and 52c support the glass turntable on three sides. There is no support on a fourth side that is in the field of view of the camera.

As discussed above, the left and right camera arms 28 and 30, and the left and right backlight arms 38 and 36, are connected together and can be rotated relative to the turntable 14 by arm drive 80. Figures 9 to 12 show the camera and backlight arms in a number of different positions relative to the turntable. None of the support wheel arrangements 52a, 52b and 52c or drive wheel arrangement 50 are within the optical view of the camera 20 (with some boundary area) of either the small object 92 or the large object 94. Further, no mechanical gear or belt is used to rotate the glass turntable, neither is a spindle used. As a result, there are no obstacles in the area of the target object, with some boundary area, within the optical field of view of the digital camera 20. Clearly, this is advantageous because any such obstacles would be visible in the images taken by the camera 20.

In Figure 9, the left camera arm 28 is horizontal, i.e. it extends along the axis of the turntable 14. In Figure 10, the left camera arm 28 is orientated 80 degrees above the axis of the turntable 14. In Figure 11, the left camera arm 28 is orientated 45 degrees above the axis of the turntable 14. In Figure 12, the left camera arm 28 is orientated 70 degrees below the axis of the turntable 14 (or at an angle of -70 degrees relative to the turntable). The camera arm is driven by arm drive 80 and the arm rotation position (or elevation angle) is controlled by driving the stepping motor 90.

In the use of the photographic apparatus 12 to capture a plurality of images of an object, different images can be taken at different elevations. For example, views can be taken at raised positions relative to the turntable (as in Figures 10 and 11) and below the object (as in Figure 12). Clearly, the arm drive 80 of the photographic apparatus 12 is able to position the camera arm in any position on the arc 82, the angles shown in Figures 9 to 12 are merely exemplary.

As shown in Figures 9 to 12, the camera unit 18 and the backlight unit 32 rotate relative to turntable 14 on which an object to be modelled can be placed. Thus, the same backlight unit 32 is used for all positions of the camera 20. This ensures uniformity in the distance from the camera 20 to the backlight unit 32 and also ensures uniformity in the brightness and hence in the image generated. The use of a single movable backlight unit is preferable to the use of multiple fixed backlight units for a number of reasons. For example, with fixed backlight units there is the potential for backlight units to be in the background of a captured image.

Also, the use of multiple backlight units increases the size and cost of the photographic apparatus. The use of a single camera and backlight unit increases the flexibility of the system since the camera and backlight can be positioned at any angle relative to the turntable. This is simply not possible if fixed devices are used. In the preferred embodiment described below, there are four possible elevation angles of camera arm, namely +80, +45, +10, and -70 degrees. However, the single camera with backlight can be positioned at any desired angle depending, for example, on the target object and the geometric accuracy required for the 3D object model.

One other advantage of utilising a single camera and backlight is that it is possible to have a larger and more flexible range of elevation angles. In the particular embodiment described, the camera arm is rotated between +80 degrees through -70 degrees with respect to the glass turntable 14. The range of possible elevation angles of camera position may be much reduced in the case of one or more fixed backlight units since part of a fixed backlight unit placed for a higher camera angle might be in the way of a camera position at a lower angle, or vice versa.

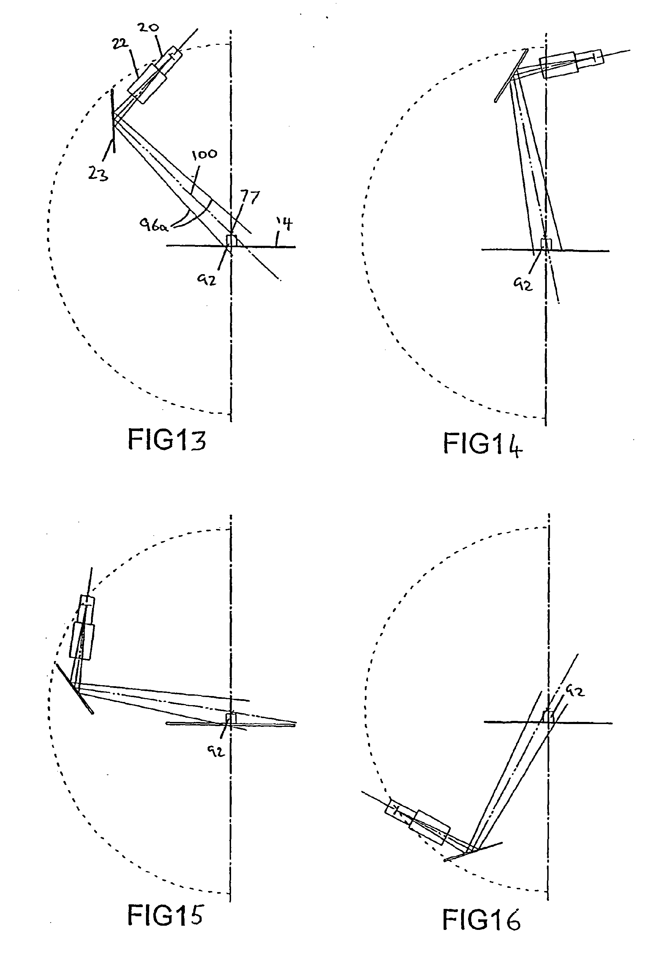

Figures 13 to 16 show simplified views of the photographic apparatus 12 having the camera arm orientated at different angles relative to the turntable. Of the elements of the photographic apparatus 12, only the turntable 14 and the digital camera 20, zoom lens 22 and mirror 23 of the camera unit 18 are shown in Figures 13 to 16. Also shown in Figures 13 to 16 are the small object 92 and the extremities of the corresponding optical vertical view 96a (which is related to the horizontal optical view 96 described with reference to Figure 9) and the optical axis 100 extending from the digital camera 20 to the object 92 on the turntable.

In each of the examples of Figures 13 to 16, the optical axis 100 is deflected by the mirror 23. This feature is discussed further below.

In Figure 13, the optical axis 100 is orientated 45 degrees above the axis of the turntable 14. In Figure 14, the optical axis 100 is orientated 80 degrees above the axis of the turntable 14. In Figure 15, the optical axis is orientated 10 degrees above the axis of the turntable 14. In Figure 16, the optical axis is orientated 70 degrees below the axis of the turntable 14 (or at an angle of -70 degrees relative to the turntable).

The optical axis 100 of the photographic apparatus passes through a fixed point relative to the glass turntable 14.
That point is the axis of rotation 77 of the arc 82 (marked with a cross in Figures 13 to 16). In the examples of Figures 13 to 16, the point 77 is near the top of the object 92. The vertical optical view 96a extends a small distance either side of the point 77 so that the object 92 is within the optical view of the digital camera 20 with some boundary space on either side of the object 92. In the example of Figure 14, when the optical axis is orientated 80 degrees above the object 92, the object 92 is close to the centre of the optical view 96a. This is advantageous since the resulting image captured by the digital camera 20 is almost centred on the object 92. Similarly, in Figure 16, when the optical axis is orientated 70 degrees below the object 92, the object is close to the centre of the optical view 100. However, as the camera moves closer to being horizontal with the turntable 14, the object moves lower in the vertical optical view 96a. In Figure 15, with the optical axis orientated only 10 degrees above the object 92, the object is very low in the vertical optical view 96a.

Clearly, if an object moves outside the optical view of the camera, then it is not possible to obtain the required image data for that view of the object. Thus, if the object moves in the optical view vertically, then that optical view must be made sufficiently large (i.e. wide) to ensure that the object does not move outside of the optical view. The effect of this is that the optical view is significantly larger than the target object itself. If the object could be prevented from moving within the optical view, the optical view could be made smaller (i.e. narrower) and hence the image of the object could be captured with a higher resolution, leading to an increased quality of three-dimensional image, without risking the object moving out of the optical view.

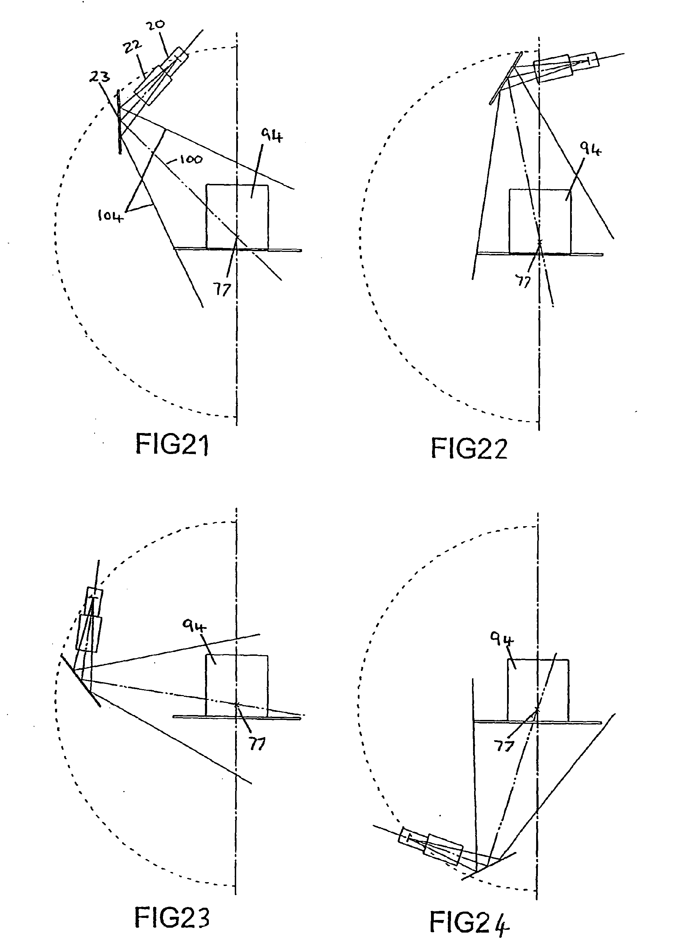

Figures 21 to 24 show similar views of the photographic apparatus 12 as Figures 14 to 16, except that the small object 92 of Figures 13 to 16 is replaced with the large object 94 shown in Figure 8. The optical axis 100 extending from the digital camera 20 to the object 94 is identical to the optical axis shown in Figure 13 to 16 and passes through the axis 77. The optical vertical view 104 is much larger (i.e. wider) than the optical view 96a of Figures 13 to 16 so that the larger object is within the optical view of the digital camera 20. The optical view, which comprises either optical horizontal view 96 and optical vertical view 96a, or optical horizontal view 98 and optical vertical view 104, is set by the zoom position setting of the zoom lens 22. The zoom position is set by the operator as described below.

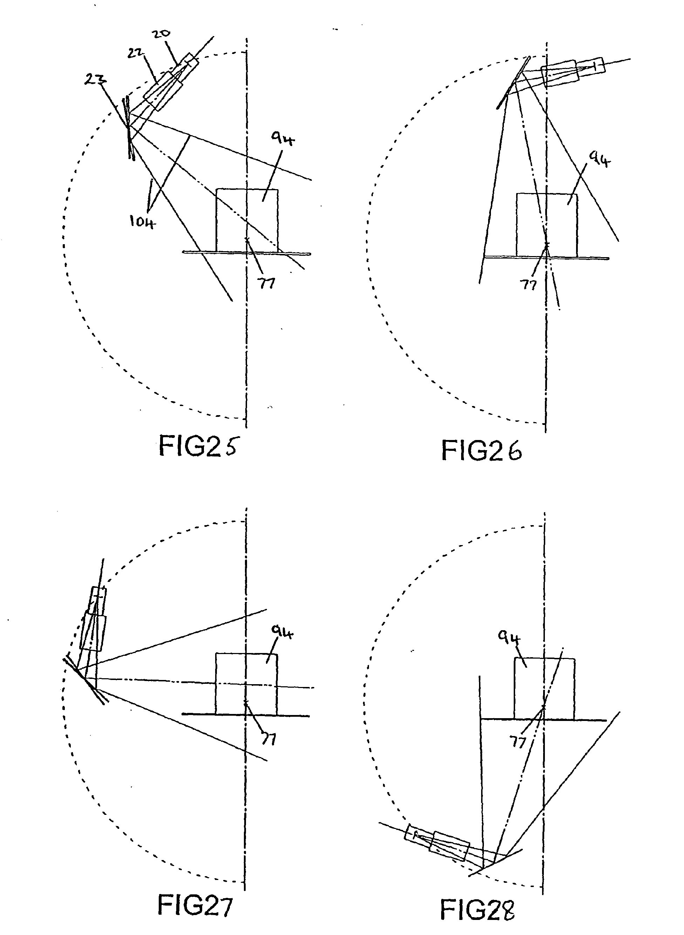

In a similar way to the example of Figure 14, in the example of Figure 22, the optical axis is orientated 80 degrees above the object 94 and the object is close to the centre of the optical vertical view 104. This is advantageous since the resulting image captured by the digital camera 20 is almost centred on the object 94. Similarly, in Figure 24, when the optical axis is orientated 70 degrees below the object 94, the object is close to the centre of the optical view 104. With the camera closer to being horizontal with the turntable 14, as in Figures 21 and 23, the object 94 moves away from the centre of the optical view, but unlike in Figures 13 to 16, the object 94 moves higher in the optical view 104.

The problem of objects moving within the optical view of the digital camera 20 can be reduced in a simple manner by tilting the mirror 23 when the camera arm is orientated close to the horizontal.

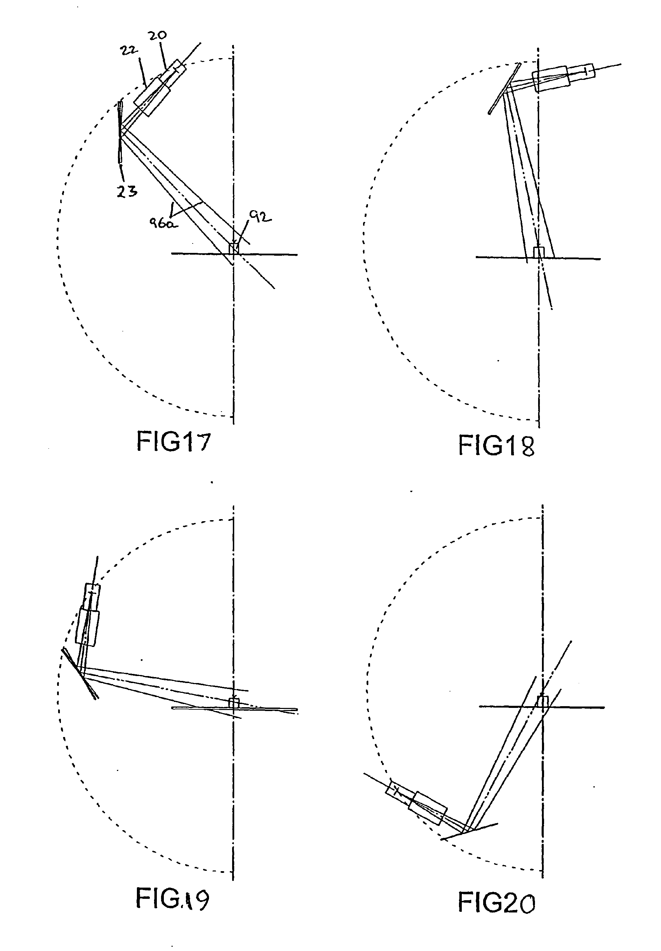

Figures 17 to 20 are identical to Figures 13 to 16 respectively with the exception that the angle of the mirror 23 (and hence the position of the optical view relative to the object 92) in Figures 17 and 19 has been changed relative to the mirror position in Figures 13 and 15. The mirror positions in Figures 18 and 20 (when the camera arm is significantly away from the axis of the turntable 14) are the same as in Figures 14 and 16 respectively.

Refer to Figures 13 and 17. In Figure 13, the object 92 is positioned low down in the optical view 96a. In Figure 17, the mirror has been tilted in a clockwise direction such that the optical axis passes through a lower point in the object 92 and the object 92 is located closer to the centre of the optical view 96a. (Note that Figure 17 shows both the untilted mirror position of Figure 13 and the tilted mirror position of Figure 17.)

Refer now to Figures 15 and 19. In Figure 15, the object 92 is positioned low down in the optical view. In Figure 19, the mirror has been tilted in a clockwise direction such that the optical axis passes through a lower point in the object 92 and the object 92 is located closer to the centre of the optical view 96a.

The mirror is not titled in the examples of Figures 18 and 20. Accordingly, Figures 18 and 20 are identical to Figures 14 and 16 respectively.

Figures 25 to 28 are identical to Figures 21 to 24 respectively with the exception that the angle of the mirror (and hence the position of the optical view relative to the object 94) in Figures 25 and 27 has been changed relative to the mirror position in Figures 21 and 23.

Refer to Figures 21 and 25. In Figure 21, the object 94 is positioned high up in the optical view 104. In Figure 25, the mirror has been tilted in an anti-clockwise direction such that the optical axis 100 passes through a higher point in the object 94 and the object 94 is located closer to the centre of the optical view 104.

Refer now to Figures 23 and 27. In Figure 23, the object 94 is positioned high up in the optical view 104. In Figure 27, the mirror has been tilted in an anti-clockwise direction such that the optical axis 100 passes through a higher point in the object 94 and the object 94 is located closer to the centre of the optical view 104.

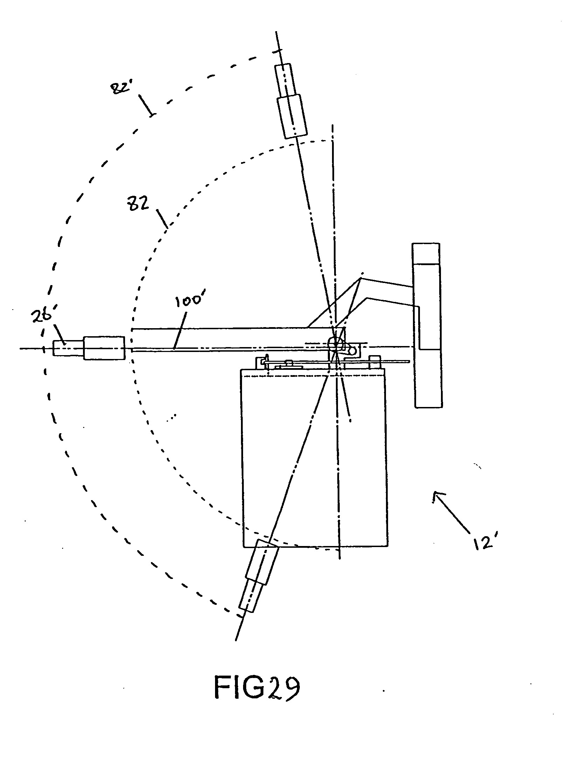

The mirror is not titled in the examples of Figures 26 and 28. Accordingly, Figures 26 and 28 are identical to Figures 22 and 24 respectively.

The amount of tilting required depends on the orientation of the camera unit 18 with respect to the glass turntable 14 since the problem is reduced when that angle increases. The direction of tilting required depends on the size of the object, since small objects will tend to appear low down in the optical view of the camera and large objects will tend to appear higher in the optical view of the camera.

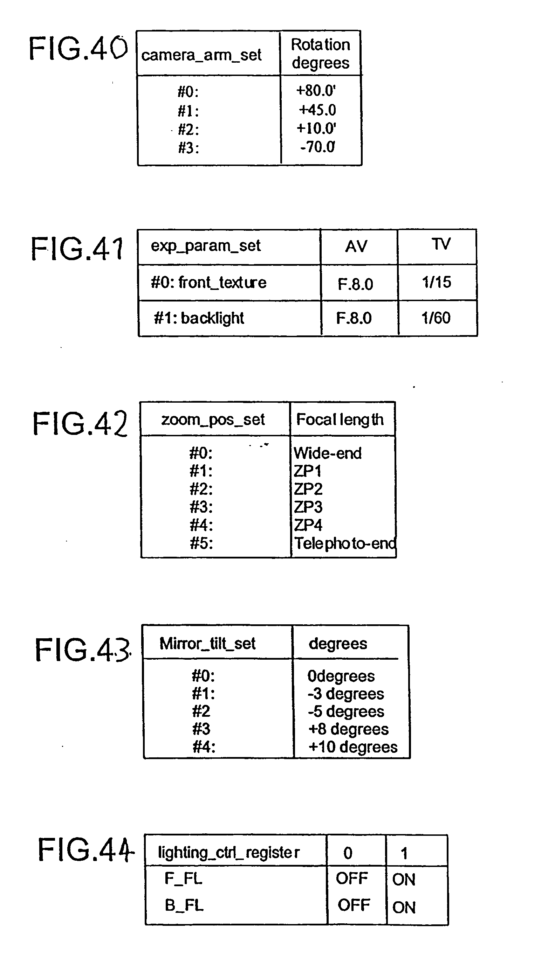

Appropriate angles of tilting of the mirror have been determined by experimentation with the photographic apparatus. In the use of the photographic device 2 described in detail below, the camera arm is positioned at one of 80, 45, 10 and - 70 degrees relative to the turntable 14. As discussed above, when the camera arm approaches the vertical, the object remains in the centre of the optical view and no tilting of the mirror is required. Hence, with the camera arm at either 80 or -70 degrees relative to the turntable, no mirror tilting is necessary. When the camera moves closer to the horizontal, small objects tend to move lower in the optical view and large objects tend to move higher in the optical view. The effect becomes more pronounced the closer the camera arm is to the horizontal. With a small object, a clockwise (negative) rotation of the mirror is required. Angles of 3 degrees and 5 degrees have been found to be effective when the camera arm is at 45 and 10 degrees to the horizontal respectively. With a large object, an anticlockwise (positive) rotation of the mirror is required. Angles of 8 and 10 degrees have been found to be effective when the camera arm is at 45 and 10 degrees to the horizontal respectively. These values are shown in the table of Figure 43, described in more detail below.

Instead of having a mirror described above, an optical glass prism can be employed to deflect optical axis, which might have flatter reflection surface than a mirror.

Instead of tilting the mirror to move the object closer to the centre of the optical view of the camera, the position of the camera could itself be adjusted. This approach is relatively straightforward, however, repeating mirror adjustments accurately is easier than repeating camera adjustments accurately as the mechanical mass and weight of the camera 20 and zoom lens 22 is considerably greater than that of mirror 23 and the associated supporting mechanism. As will be seen later, it is important that successive images are taken from the same locations in order to provide accurate three dimensional models; accordingly, tilting the mirror is generally preferred to moving the camera itself.

Figure 29 shows a simplified view of a photographic apparatus, indicated generally by the reference numeral 12', in accordance with an alternative embodiment of the present invention in which the mirror shown in the previous embodiments is omitted. Since no mirror is provided, the optical path 100' from the object being photographed to the digital camera 20' is a straight line. Thus, the photographic apparatus 12' of Figure 29 is simpler than the photographic apparatus 12 of Figures 2 to 28 but omitting the mirror results in an increase of the radius of curvature of the camera arm, and hence the size of the apparatus, especially its height. The arc 82 travelled by the camera unit 18 in the examples of Figures 7 and 9 to 28 is shown in Figure 29. It can clearly be seen that a corresponding arc 82' for the photographic device 12' of Figure 29 would be larger.
Further, since there is no mirror to deflect the optical path 100, the optical axis 100' cannot be tilted as described above.

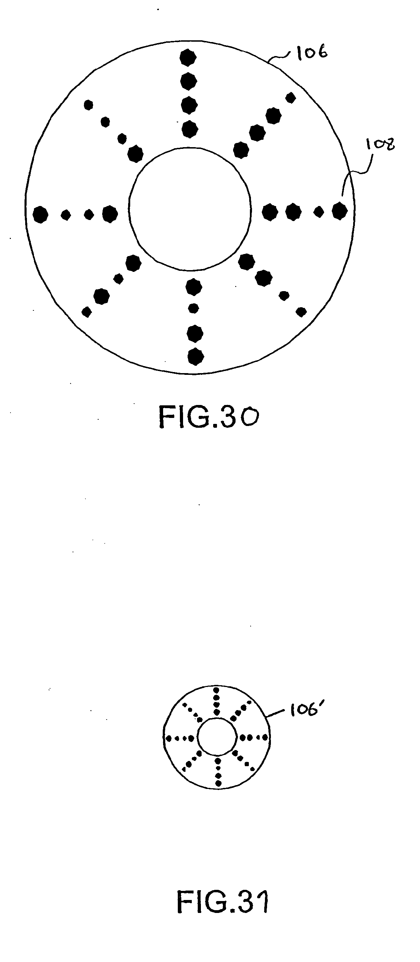

Figure 30 shows a calibration mat 106 for use with the photographic apparatus 12 of the present invention. Calibration dots 108 are positioned on the calibration mat 106 to enable the detection of the position, orientation and focal length of the digital camera 20 with zoom lens 22 in each of its various positions of use. There are 32 calibration dots shown in the calibration mat 106 of Figure 30, four dots being located on each of eight different radii dividing the mat 106 into eight equal angles. The calibration dots may have different sizes, as shown, and preferably each set of four dots on a radius has a different pattern of dot sizes compared with the other sets. The calibration mat 106 has the same calibration dots located in exactly the same positions on the front and rear of the mat.

A number of images of the calibration mat are taken by the digital camera 20 during a calibration process. The images are processed to detect the calibration dots 108 on the calibration mat 106 in the captured image. The detected calibration dots are analysed to determine a central position of the calibration mat 106 for creating supposed three-dimensional coordinates. In accordance with the supposed three-dimensional coordinates, a position, an orientation and a focal length of the digital camera 20 can be obtained from the image of the calibration dots 38 by using perspective information. Further details of the calibration process, and how the calibration data obtained is used in the generation of three-dimensional objects of models are given below.

Different mats may be provided in order to calibrate the photographic apparatus for different sizes of object. For example, the large mat of Figure 30 may be used to calibrate the system for the large object 94 (with correspondingly large optical view). The smaller (but otherwise identical) mat 106' of Figure 31 may be used to calibrate the system for the small object 92. As the optical field of view of zoom lens 22 is varied depending on size of target object to be modelled, it is advantageous if the size of the calibration pattern changes accordingly.

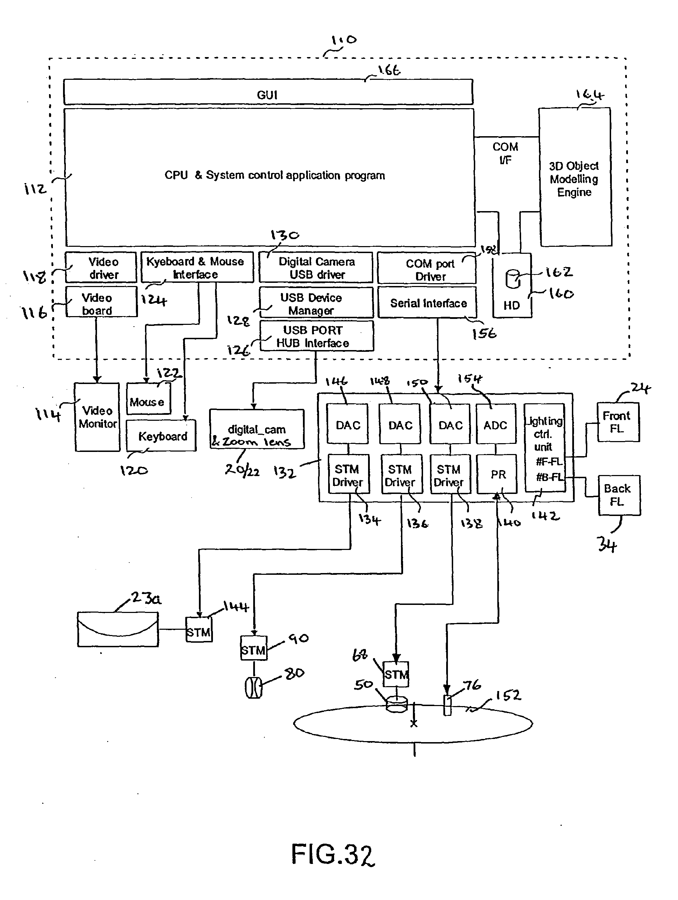

Figure 32 is a block diagram of a three-dimensional modelling system incorporating the photographic apparatus 12 or 12' described above. The modelling system includes a computer system 110. The computer system 110 may be any suitable personal computer and may be a PC platform conforming to the well-known PC/AT standard.

The computer system 110 includes a central processing unit (CPU) 112 that is used to execute an application program. Normally, the application program is stored in a ROM or a hard disk within the computer system 110 as object code. That program is read from storage and written into memory within the CPU 112 at system launch for execution by the computer system 110. Detailed descriptions of data flow, control flow and memory construction are omitted from the present description since they do not relate directly to the present invention and suitable implementations are well known to persons skilled in the art.

A video monitor 114 is connected to the computer system 110.
A video signal to be displayed by the video monitor 114 is output from a video board 116 to which the monitor 114 is connected. The video board 116 is driven by a video driver 118 consisting of a set of software programs. A keyboard 120 and mouse 122 are provided to enable an operator of the system to manually input data. Such input data are interpreted by a keyboard and mouse interface 124 to which the keyboard 120 and mouse 122 are connected. Of course, other data input and output devices could be used in addition to, or instead of, the video monitor 114, keyboard 120 and mouse 122 in order to enable the operator to communicate with the computer system 110.

The digital camera 20 and zoom lens 22 are connected to the computer system 110 by a Universal Serial Bus (USB) port and HUB interface 126. A USB device manager 128 manages USB port 126 (and any other USB ports under its control). The digital camera 20 and zoom lens 22 are controlled by a USB driver 130. Control functions, including image capturing, exposure control, and zoom positioning are controlled by the computer system 110.

An interface box 132, external to the computer system 110, controls communications between STM drivers 134, 136 and 138, photodetector monitor 140, lighting control unit 142 and the computer system 110.

STM driver 134 drives and controls a stepping motor 144 used to tilt the mechanical tilting stage 23a of the mirror 23 as described above. STM driver 136 drives and controls the stepping motor 90 used to drive the arm drive 80. STM driver 138 drives and controls the stepping motor 68 used to drive the drive wheel arrangement 50. STM drivers 134, 136 and 138 control steeping motors 144, 90 and 68 respectively in accordance with outputs from digital-to-analogue converters (DACs) 146, 148 and 150 respectively. DACs 146, 148 and 150 each convert digital data received from the computer system 110 into analogue signals for use by the STM drivers 134, 136 and 138 respectively.

Photodetector monitor 140 detects an output from photodetector device 76 indicating positions of one or more marks 152 composed of evaporated aluminium thin films or thin material located on a circumference of the turntable 14. The analogue output of the photodetector monitor 140 is converted into digital data by analogue-to-digital converter (ADC) 154 for use by the computer system 110.

The lighting control unit 142 has a register that controls front fluorescent light unit 24 and backlight unit 32. This register is a 2-bit register, the first bit (control signal #F-FL) controlling front fluorescent light unit 24, the second bit (#B-FL) controlling backlight unit 32. These control signals are created in accordance with the application program of computer system 110.

The computer system 110 and interface box 132 communicate via serial interface 156 under the control of communication serial port driver (COM port driver) 158. Digital data for use by STM drivers 134, 136 and 138 are sent from CPU 112 to those STM drivers via the serial interface 156 and the appropriate DACs 146, 148 and 150. Data from photodetector monitor 140 is passed to the CPU via ADC 154 and serial interface 156.

A hard disk unit 160 stores data 162 of texture images and silhouette images. A three-dimensional object model creating program is stored in a ROM or a hard disk within the computer system 110 as an object code and is represented in the block diagram by 3D Object Modelling Engine 164. The program is read out from storage and written into a memory within the CPU 112 when the system is launched. The code is executed from the CPU 112. The application program and the model creating program communicate through a communication (COM) interface. A program for displaying a graphical user interface (GUI) for the application is stored in the CPU 112 and is represented by the GUI block 166.

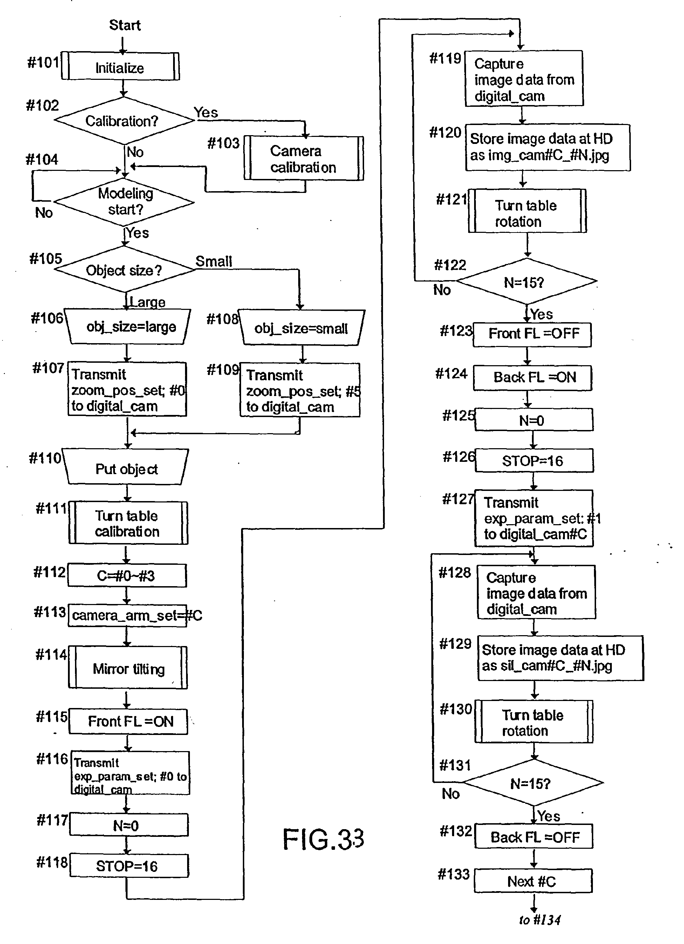

Flowcharts describing the operation of the system of Figure 32 in detail are shown in Figures 33 to 39, with reference to the tables shown in Figures 40 to 44. Briefly, the first step is to calibrate the system. First, the camera is calibrated using the calibration mat of Figure 30 or 31. The appropriate mat is placed on the turntable by the user and an off-line calibration routine is activated in which images of the calibration mat are taken at different angles of the camera head (80 degrees, 45 degrees, 10 degrees and -70 degrees are chosen here). At each of the angles of the camera head, images are taken at a different rotational position of the glass turntable 14. Once the calibration data has been obtained, the calibration mat is removed and an object to be modelled can be placed on the turntable 14. Images of the object are taken at the same positions as images of the calibration mat were taken. Using the image data and the calibration data, a three dimensional model of the object can be generated by the 3D object modelling engine 164. A detailed discussion of the operation of the system is given below.

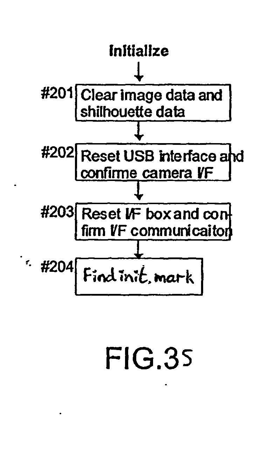

The operation of the system of Figure 32 begins at step #101, when the system is initialised by calling an initialisation subroutine. The initialisation subroutine is shown in Figure 35 and starts at step #201. At step #201, all texture and silhouette data stored in the hard disk 160 are cleared. In step #202, the CPU 112 resets the USB HUB interface 126 and the USB camera driver 130 and confirms that the digital camera 20 and zoom lens 22, the USB HUB interface 126 and camera driver 130 are able to communicate. At step #203, the CPU 112 initialises the interface box 132, the serial interface 156 and the serial port driver 158 and confirms that the interface box and serial interface are able to communicate. In step #204 of the initializing subroutine, the circular glass table 14 is returned to the predetermined original rotating position (at mark 152). In particular, the CPU 112 instructs rotation of the turntable 14 so as to locate it at the original rotation position. This instruction is transferred to the interface box 132 through the serial interface 156 and the serial port driver 158. The turntable 14 is driven in a clockwise direction until an initial mark 152 is located by the photodetector device 76. The output of photodetector device 76 is monitored by the CPU 112 by means of the photodetector monitor 140, ADC 154 and the serial interface 156. When it is detected that the mark 152 is aligned with the photodetector 76, the STM driver 138 instructs the stepping motor 68 to stop rotating the turntable 14.

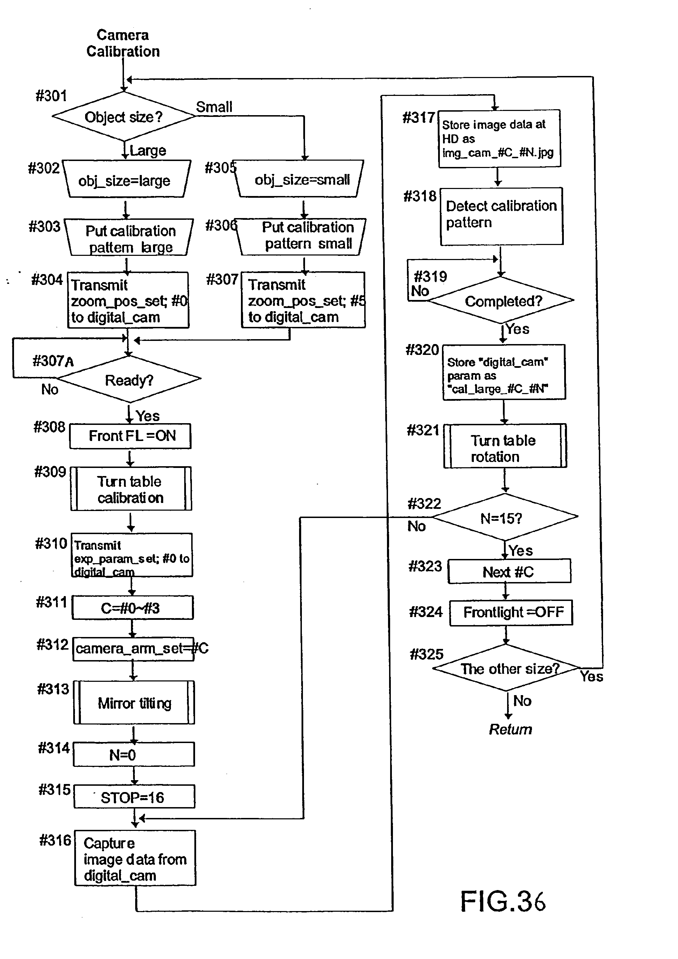

The initialisation subroutine then terminates and the program returns to the main program of Figure 33 at step #102 of the flowchart of Figure 33, at which point the operator is prompted to indicate whether calibration of the system is required. A calibration window is displayed on the video monitor 114. This is controlled by the GUI 166 via the CPU 112 and the video board 116. The operator utilises the keyboard 120 and/or the mouse 122 to indicate whether or not calibration is required. Since the GUI 166 and the selecting page itself are not important to describe this invention, detailed descriptions thereof are omitted. If calibration is required, the camera calibration step #103 is entered and the calibration subroutine of Figure 36 is executed.

As mentioned above, in order to generate three dimensional object models, both image data of the object concerned and calibration data of a suitable calibration mat are required.

As is known in the art, the calibration subroutine is used to determine a central position of the calibration mat for creating supposed three-dimensional co-ordinates. In accordance with the supposed three-dimensional coordinates, a position, an orientation and a focal length of the digital camera 20 can be obtained from the image of the calibration dots 38 by using perspective information. This information is essential to the three-dimensional modelling algorithm described in more detail below.

The camera calibration subroutine begins with the operator being asked at step #301 whether the camera is to be calibrated for the purposes of taking images of a large object (in which case the flowchart moves to step #302) or a small object (in which case the flowchart moves to step #305). It is possible for a system operator to choose the size option by using a scale specifically prepared for the system. For example, a scale having two indications of size: one representing the maximum size of large option and the other representing the maximum size of small option may be provided. The detailed explanation of the scale is omitted in this embodiment. Examples of large sized objects are training shoes or a toy doll with a height of the order of a few tens of centimetres. Examples of small sized objects include a wrist watches or a miniature car toy with a size of the order of a few centimetres, for example. The number of size options available to the operator and the maximum object size for each size option can be predetermined depending on the pixel resolution of the camera 20, target image resolution and quality of the 3D model to be created based on the image data by the photographing apparatus 12. Detailed explanations of the configuration to determine each size option is omitted in this embodiment here as they are not directly related to the objective of the present invention.

The step #301 is implemented by displaying a size-selecting window on the display of the video monitor 114. This is controlled by the GUI 166 via the CPU 112 and the video board 116. The operator utilises the keyboard 120 and/or the mouse 122 to select the size of the object by referring the displayed page. As noted above, since the GUI 166 and the selecting page itself are not important to describe this invention, detailed descriptions thereof are omitted.

If the user indicates that the object is large, then a software variable "obj_size" is set to be large in step #302 and the subroutine moves to step #303. The user is then instructed on the video monitor 114, via the GUI 166, to place the large calibration mat shown in Figure 30 on the glass turntable 14. When the user indicates, for example via the keyboard 120 or mouse 122, that this is done, a software parameter zoom_pos_set is set as #0 at step #304. As shown in the table of Figure 42, by setting zoom_pos_set as #0, the focal length of the zoom lens 22 is set to the wide-end setting.

If the user indicates that the object is small, then a software variable "obj_size" is set to be small in step #305 and the process moves to step #306. The user is then instructed on the video monitor 114, via the GUI 166, to place the small calibration mat shown in Figure 31 on the glass turntable 14. When the user indicates that this is done, the software variable zoom_pos_set is set as #5 indicating, as shown in Figure 42, that the zoom lens 22 is set to the telephoto-end setting.

Regardless of the object size, the system waits at step #307a until the system indicates that the required zoom lens position has been set and that it is ready for calibration. When it is ready for calibration, the front fluorescent lights 24 is turned on (step #308). In detail, in accordance with the application program, the CPU 112 instructs the writing of a flag "1" in the front fluorescent light control bit of the register in the lighting control unit 142 of the interface box 132 though the serial interface 156 under control of the COM port Driver 158. Accordingly an output of the port of front lights #F-FL switches to a predetermined level representing "1" and, as shown in the table of Figure 44, the fluorescent lights 24 is turned on.

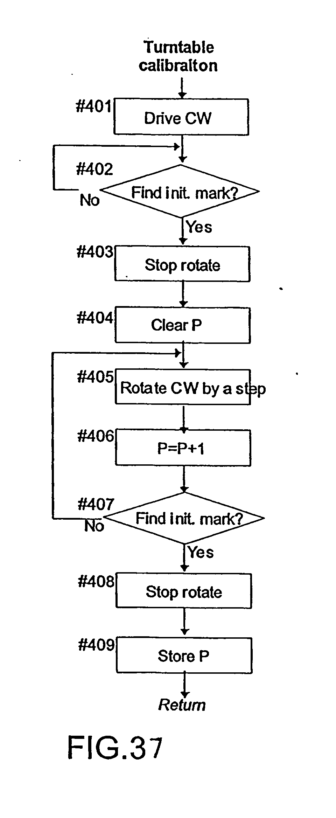

The next step, as indicated at step #309 is to initialise the turntable 14. This is achieved by calling the turntable initialisation subroutine of Figure 37.

The turntable calibration routine determines the number of pulses of stepping motor 68 that are required for one full revolution of the turntable 14 to be performed. This information is useful since knowing how many pulses are required for a complete revolution of the turntable means that the turntable can be reliably moved by the stepping motor 68 by selected fractions of a revolution. The turntable calibration routine must be called regularly since the number of pulses that are required for a revolution varies with time. This can be caused by wearing of the rubber roller 64 of the drive wheel arrangement 50 or by having objects with different weights being placed on the turntable 14.

The turntable calibration routine begins at step #401, the STM driver 138 issues instructions to the stepping motor 68 such that the driving arrangement 50 drives the turntable 14 is driven in a clockwise direction. The instructions to the STM driver 138 are received from the CPU 112 via the serial interface 156 and DAC 150.

The turntable 14 is driven in a clockwise direction until, at step #402, an initial mark 152 is located by the photodetector device 76. The output of photodetector device 76 is monitored by the CPU 112 by means of the photodetector monitor 142, ADC 154 and the serial interface 156. When it is detected that the mark 152 is aligned with the photodetector 76, the STM driver 138 instructs the stepping motor 68 to stop rotating the turntable 14 (step #403).

At this point, the turntable is in a known position, with the mark 152 aligned with the photodetector 76. A software variable "P" is then set to zero at step #404.

The STM driver 138 instructs the stepping motor to advance the turntable 14 clockwise by a single step (step #405). A single step in this case means a single pulse, or a predetermine number of pulses, of the stepping motor is applied. The software variable P is then incremented (step #406).

At step #407, it is determined whether or not the photodetector device 76 has once again detected the presence of the mark 152. If not, the steps of rotating the turntable clockwise by one step (step #405), incrementing P (step #406) and determining whether the photodetector device has detected the present of the mark 152 (step #407) are repeated until the photodetector has detected the presence of the mark 152, at which point rotation of the turntable is halted (step #408).

The detection of the mark 152 by the photodetector device 76 indicates that the turntable 14 has completed one complete revolution since the software variable P was set to zero.

Thus, the variable P is a measure of how many pulses of stepping motor 68 are required for one full revolution of the turntable 14. The variable P is stored (step #409) for later use and the turntable calibration subroutine is terminated.

The camera calibration subroutine continues at step #310 where the CPU 112 transmits the instruction "exp_param_set; #0" to the digital camera 20 to set the imaging parameters for the camera. From Figure 41 it can be seen that that instruction means that the exposure value (AV) is set at 8.0 and the shutter speed (TV) is set at 1/15 second. These parameters are transferred through the USB ports HUB interfaces 126 under control of the USB device manager 128 and the USB camera driver 130 to the digital camera 20 and zoom lens 22.

The process moves to step #311 where a loop variable C is set at 0, 1, 2 or 3. Initially, C is set at zero.

In step #312, the variable "camera_arm_set" is made equal to the value of loop variable C. As stated above, this value is initially 0. The camera_arm_set variable determines the elevation angle of the camera arms 28 and 30 relative to the turntable 14. An initial value of C=0 sets the camera arm angle to 80 degrees (i.e. nearly vertical, as in Figure 14, for example). Values for C of 1, 2 and 3 respectively set the camera arm angle at 45 degrees, 10 degrees and -70 degrees (as shown in Figures 13, 15 and 16 respectively, for example).

Thus the camera arm angle is initially set at 80 degrees (since C=0). This is achieved by CPU 112 issuing instructions to STM driver 136 to driver stepping motor 90 until the camera angle is set at 80 degrees by arm drive 80. The above correspondence between the variable C and the elevation angle of the camera arms are listed in the table of Figure 40.

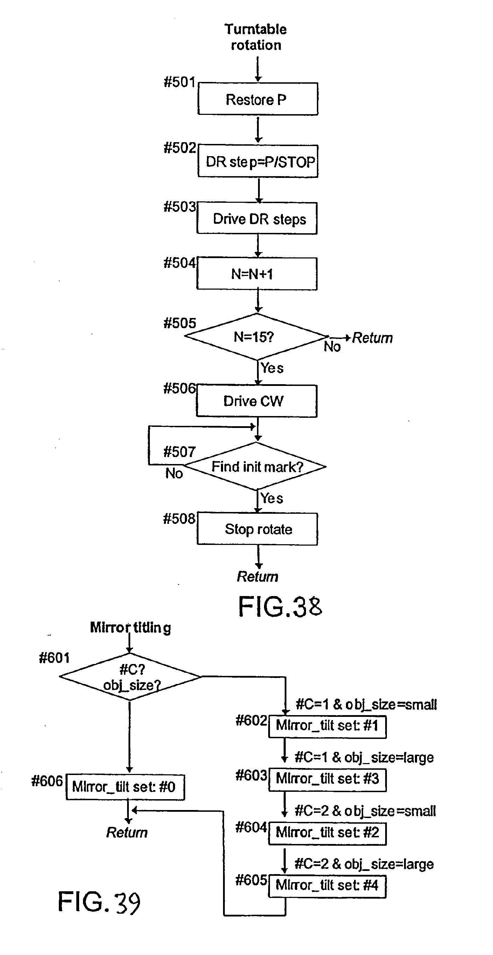

With the camera arm angle set, the process moves to step #313, which calls a mirror tilt subroutine, as shown in Figure 39.

The mirror tilt subroutine sets a software variable "mirror_tilt set" depending on the value of the variable C and the variable "obj_size" (step #601). The variable mirror_tilt set is set to one of #0, #1, #2, #3 or #4. As shown in Figure 43, those variables respectively set the angle of tilt of the mirror 23 at 0, -3, -5, +8 or +10 degrees.

If the variable C has a value 1 and the object size is small, then the variable mirror_tilt set is #1 (step #602). If the variable C has a value 1 and the object size is large, then the variable mirror_tilt set is #3 (step #603). If the variable C has a value 2 and the object size is small, then the variable mirror_tilt set is #2 (step #604). If the variable C has a value 2 and the object size is large, then the variable mirror_tilt set is #4 (step #605). Otherwise, the variable mirror_tilt set is #0 (step #606).

With the mirror tilt angle set, the mirror tilting subroutine is terminated.

The camera calibration subroutine returns to step #314, where a loop variable N is set as one of sixteen integers from "0" to "15". Initially the variable N is set as "0". At step #315, a software variable STOP is set to 16.

By this point, the front fluorescent light is on, the exposure parameters for the digital camera 20 have been set (initially to #0) and the camera arm and mirror tilting positions have been set (initially to 80 degrees and 0 degrees respectively).

At this point, the digital camera 20 is instructed to take an image (step #316).

Image data obtained by the digital camera 20 is transferred to the hard disc unit 160 through the USB ports HUB interfaces 126 after compressing the image data in conformity with well-known JEPG compression scheme. Clearly, data compression is not essential but transmission time and data storage space requirements make such compression schemes attractive. Also, data compression schemes other than the JPEG scheme can be used. At step #317, the image data captured by the camera 20 is stored as file "img_cam_#C#N", thus the first file, with C=0 and N=0 will be "img_cam_0_0.jpg". Since the image is mirrored by the mirror 23, the original image data captured by digital camera 20 is flipped digitally in order to restore the proper orientation.

The image taken is of the calibration mat placed on the turntable by the user at either step #303 (large object) or step #306 (small object). At step #318, the CPU detects the calibration pattern of the calibration mat in the captured image data, namely, "img_cam_#C#N.jpg".

The JEPG compressed image data obtained in the step #316 and stored in the step #317 is processed and developed and the CPU 112 detects the calibration dots 108 on a calibration mat 106 (or 106' in the case of a small object) in the captured image in accordance with the application program and three-dimensional object model creating program 164 in a step #318. The CPU 112 processes and analyses the detected calibration dots and determines a central position of the calibration mat 106 for creating supposed three-dimensional coordinates. As described above, in accordance with the supposed three-dimensional coordinates, camera calibration parameters consisting of camera position, an orientation and a focal length of the digital camera are obtained from the image of the calibration dots 38 by using perspective information. Detailed methods or processes for obtaining the central position of the calibration mat 106, the supposed three-dimensional coordinates, the camera calibration parameters such as the position and the orientation of the digital camera, and the focal length were disclosed in several former patent applications, for example, a Japanese Laid-Open Patents numbered 00-96374, a Japanese Laid-Open Patents numbered 98-170914 and a UK patent application numbered 0012812.4 These methods or processes, and others which are known to the persons skilled in the art, can be adopted for the step #318. Therefore, in this specification, detailed descriptions of such concrete methods and processes have been omitted.

Once the calibration pattern detection process is complete (step #319), the calibration data can be stored (step #320) as filed "cal_large_#C#N" for a large object or "cal_small_#C#N" for small object. Thus the initial calibration data for a small object would be stored as file "cal_small_0_0".

With the first calibration data point stored, the turntable is incremented at step #321 by calling a turntable rotation subroutine, as shown in Figure 38.

The first step of the turntable rotation subroutine (step #501) is to restore the value P stored at step #409 of the turntable calibration subroutine. As noted above, the software variable P is a measure of the number of pulses of the stepping motor 68 required to turn the turntable 14 through one complete revolution.

The variable P is divided by the variable STOP (set at 16 at step #315) to obtain a value DR step (step #502). The value DR step is a measure of the number of pulses of the stepping motor 68 required to turn the turntable 14 through 1/16 of a complete revolution.

At step #503, the CPU 122 instructed STM driver 138 to drive the stepping motor 68 for DR steps, thereby moving rotating the turntable 14 through 1/16 of a complete revolution.

Once the turntable has been rotated, the value N is incremented (step #504) and the CPU 122 determines whether or not the value N has reached 15 (step #505). If the value N has not reached 15, the turntable rotation subroutine terminates and the program returns to the main algorithm at step #322. A further check regarding whether N=15 is made at step #322, before the steps #316 to #321 are repeated with the new value N.

Thus with the camera in the first position (80 degrees above the horizontal), calibration data is taken for the glass turntable at 16 different positions, the calibration data stored (for a large object) being cal_large_0_0, cal_large_0_1 ... cal_large_0_15.

Once the data cal_large_0_15 has been stored, the value N is incremented at step #504 and becomes 15. The turntable rotation subroutine no longer terminates at step #505 and proceeds to #506. The turntable is driven clockwise at step #506 and continues until the photodetector indicates that the mark 152 is once again aligned with the photodetector. Thus, in a similar manner as in the turntable calibration subroutine, the turntable rotation subroutine terminates at step #508 with the mark 152 aligned with the photodetector 76 so that the turntable 14 is once again in its original position.

The camera calibration routine returns to step #322, which is answered positively and the program proceeds to step #323 where the value C is incremented.

At this stage, 16 calibration readings have been taken with the camera arm at position #0 (80 degrees). With C incremented to #1, the camera arm is moved to position #1 (45 degrees). The steps #312 to #322 are repeated so that 15 calibration readings are taken with the camera arm at position #1. At step #323, C is incremented to #2 and the process is repeated with the camera arm at position #2 (10 degrees) and is repeated once more with the camera arm at position #3 (-70 degrees).

When the program returns to step #323 with C set at #3, the following calibration data (assuming a large object) has been stored:
cal_large_0_0, cal_large_0_1 ... cal_large_0_15
cal_large_1_0, cal_large_1_1 ... cal_large_1_15
cal_large_2_0, cal_large_2_1 ... cal_large_2_15
cal_large_3_0, cal_large_3_1 ... cal_large_3_15

The front fluorescent light is switched off at step #324 and at step #325 the operator is asked whether the camera calibration should be performed for the other size of object (i.e. if the calibration has been performed for a large object, does it also need to be done for a small object?). If so, the camera calibration algorithm is repeated for the other size of device. If not, the camera calibration subroutine terminates.

As discussed above, the zoom position of zoom lens 22 is set depending on the size of the object to be modelled. Each zoom position of the zoom lens 22 must therefore be calibrated.
The objective of providing different zoom options for different objects is to provide the appropriate pixel resolution for each object, regardless of its size. However, if the operator is allowed to set the zoom position to any possible position, each of these must be calibrated. This takes time and requires a large amount of data to be stored.

By allowing only a small number of object sizes (in this case two) and setting the zoom position according to the size of object indicated by the operator, the number of calibration steps is reduced and, as a result, both the time taken to perform the calibration steps and the data storage requirements are reduced. Furthermore, the operator is only required to indicate the size of the object being modelled. There is no need for the operator to directly set the zoom position of the zoom lens 22. This contributes to the overall aim of reducing the skill required of the operator.

At this stage, all calibration data has been obtained. To this point, all the operator of the photographic apparatus 12 has needed to do is to indicate via GUI 166 that calibration is required (step #102), indicate the object size (step #301), place the appropriate calibration mat on the turntable (step #303 and/or step #306) and remove the calibration mat at the end of the calibration process. The remaining steps of the calibration procedure are entirely automatic. Specifically, the operator does not need to position the camera arm, the backlight unit or the turntable to their required positions for each calibration image.

Once the camera calibration subroutine (step #103) has been completed, modelling can begin. The operator is asked at step #104 whether modelling should start. If yes, the process proceeds to step #105, if not the step #104 is repeated until the operator is ready to begin modelling. The step #104 is implemented by displaying a window on the display of the video monitor 114 asking the operator to indicate whether or not modelling should begin. This is controlled by the GUI 166 via the CPU 112 and the video board 116. The operator utilises the keyboard 120 and/or the mouse 122 to indicate whether or not modelling should begin. As noted above, since the GUI 166 and the selecting page itself are not important to describe this invention, detailed descriptions thereof are omitted.

The modelling begins with the operator being asked at step #105 whether the object to be modelled is large (in which case the routine moves to step #106) or small (in which case the routine moves to step #108). As explained in step #301, the target object size is assessed by the operator by referring to a scale prepared specifically for the photographing apparatus. The step #105 is implemented by displaying a size-selecting window on the display of the video monitor 114. This is controlled by the GUI 166 via the CPU 112 and the video board 116. The operator utilises the keyboard 120 and/or the mouse 122 to select the size of the object by referring the displayed page. Again, detailed descriptions of these elements are omitted.

If the user indicates that the object is large, then a software variable "obj_size" is set to be large in step #106. A software parameter zoom_pos_set is then set as #0 at step #107. From the table of Figure 42, it can be seen that by setting zoom_pos_set as #0, the focal length of the zoom lens 22 is set to the wide-end setting.

If the user indicates that the object is small, then a software variable "obj_size" is set to be small in step #108 The software variable zoom_pos_set is set as #5 indicating, as shown in Figure 42, that the zoom lens 22 is set to the telephoto-end setting.

Once the zoom lens has been set to the appropriate setting, the operator is instructed on the video monitor 114, via the GUI 166, to put the object to be modelled on the turntable, as close to the centre of the turntable as possible (step #110). Once the user has indicated that this is complete, for example by using the keyboard 120 or mouse 122, the process proceeds to step #111, which calls the turntable calibration subroutine.

The process for calibrating the turntable is described above with reference to Figure 37. As indicated above, the turntable calibration process stores a software variable P that is a measure of how many pulses of the stepping motor 68 are required for one full revolution of the turntable 14. It is advantageous to perform the turntable calibration for each object that is modelled since the value P may vary. For example, the value P may vary over time as the driving mechanism of the turntable wears. Furthermore, the value P may be dependent on the weight of the object being modelled. For example, a very heavy object may result in more pulses of the stepping motor being required for one full revolution of the turntable 14.

With the turntable calibrated, the process proceeds to step #112 where a loop variable C is set at 0, 1, 2 or 3. Initially, C is set at zero.

As described above with reference to the camera calibration process, the variable "camera_arm_set" is made equal to the value of the loop variable C. An initial value of C=0 sets the camera arm angle to 80 degrees. Values of C of 1, 2 and 3 respectively set the camera arm angle at 45 degrees, 10 degrees and -70 degrees.

With the camera angle set according to the value of the loop variable C (step #113), the process moves on to step #114, which calls the mirror tilting subroutine. As described above, the mirror tilt subroutine sets a software variable "mirror_tilt set" depending on the value of the variable C and the variable obj_size set at steps #105, #106 and #108. The mirror tilt subroutine terminates with the mirror tilt angle set at one of 0, -3, -5, +8 or +10 degrees, as described above with reference to Figure 39.

The process proceeds to step #115 at which point the front fluorescent light unit 24 is turned on. In accordance with the application program, the CPU 112 instructs the writing of a flag "1" in the front fluorescent light control bit of the register in the lighting control unit 142 of the interface box 132 though the serial interface 156 under control of the COM port Driver 158. Accordingly an output of the port of front lights #F-FL switches to a predetermined level representing "1" and, as shown in the table of Figure 44, the fluorescent lights 24 is turned on.

At step #116, the CPU 112 transmits the instruction "exp_param_set; #0" to set the imaging parameters for the digital camera 20 and zoom lens 22. From Figure 41 it can be seen that that instruction means that the exposure value (AV) is set at 8.0 and the shutter speed (TV) is set at 1/15 second. These parameters are transferred through the USB ports HUB interfaces 126 under control of the USB device manager 128 and the USB camera driver 130 to the digital camera 20 and zoom lens 22.

At step #117, a loop variable N is set as one of sixteen integers from "0" to "15". Initially the variable N is set as "0". At step #118, a software variable STOP is set to 16.

By this point, the front fluorescent light is on, the exposure parameters of the digital camera 20 and zoom lens 22 have been set (initially to #0) and the camera arm and mirror tilting positions have been set (initially to 80 degrees and 0 degrees respectively). At this point, the digital camera 20 is instructed to take an image (step #119).

Image data obtained by the digital camera 20 is transferred to the hard disc unit 160 through the USB ports HUB interfaces 126 after compressing the image data, advantageously in conformity with well-known JEPG compression scheme as discussed above. At step #120, the image data captured by the camera 20 is stored as file "img_cam_#C#N", thus the first file, with C=0 and N=0 will be "img_cam_0_0.jpg". As noted above, since the image is mirrored by mirror 23, the original image data captured by digital camera 20 may be flipped digitally in order to restore the proper orientation.

With the first image stored, the turntable is incremented at step #121 by calling a turntable rotation subroutine, as shown in Figure 38. As described above, the turntable rotation subroutine rotates the turntable 14 by 1/16 of a complete revolution. The process of taking images is repeated at each of sixteen locations around the turntable until N=15 and the loop of steps #119 to #122 is terminated.

Thus, with the camera in the first position (80 degrees above the horizontal), image data is taken for the glass turntable at 16 different positions, the image data stored being img_cam0_0.jpg, img_cam_0_1.jpg ... img_cam_0_15.jpg. Of course, as a result of the calibration process, the positions at which each of these images is taken is known to the 3D object modelling engine 164.

The front fluorescent light is then turned off at step #123 and the back fluorescent light turned on at step #124. The loop variable N is reset to 0 (step #125) and the variable STOP set to 16 (step #126).

At step #127, the CPU 112 transmits the instruction "exp_param_set; #1" to set the imaging parameters for the digital camera 20 and zoom lens 22. From Figure 41 it can be seen that that instruction means that the exposure value (AV) is set at 8.0 and the shutter speed (TV) is set at 1/60 second. These parameters are transferred through the USB ports HUB interfaces 126 under control of the USB device manager 128 and the USB camera driver 130 to the digital camera 20.

By this point, the backlight unit 32 is on, the exposure parameters have been set (initially to #1) and the camera arm and mirror tilting positions have been set (initially to 80 degrees and 0 degrees respectively). At this point, the digital camera 20 is instructed to take an image (step #128). Since the backlight unit 32 is on, the image taken will be a silhouette of the object on the turntable 14.

The imaging parameters may be varied for a number of reasons. For example, the imaging parameters when silhouette data is being captured may be such that the images are underexposed since this increases the contrast between the object and the background, thereby making it easier to determine the edges of the silhouette.

Silhouette data obtained by the digital camera 20 is transferred to the hard disc unit 160 through the USB ports HUB interfaces 126 after compressing the image data in conformity with well-known JEPG compression scheme. At step #129, the silhouette data captured by the camera 20 is stored as file "sil_cam_#C#N", thus the first file, with C=0 and N=0 will be "sil_cam_0_0.jpg". As noted above, since the image is mirrored by mirror 23, the original image data captured by digital camera 20 may be flipped digitally in order to restore the proper orientation.

With the first silhouette data point stored, the turntable is incremented at step #130 by calling a turntable rotation subroutine, as shown in Figure 38. As described above, the turntable rotation subroutine rotates the turntable 14 by 1/16 of a complete revolution. The process of taking images is repeated at each of sixteen locations around the turntable until N=15 and the loop of steps #128 to #131 is terminated.

Thus, with the camera in the first position (80 degrees above the horizontal), silhouette data is taken for the glass turntable at 16 different positions, the silhouette data stored being sil_cam0_0.jpg, sil_cam_0_1.jpg ... sil_cam_0_15.jpg.

The backlight unit 32 is then turned off at step #132.

At this stage, both image and silhouette data has been captured with the camera in the first position (80 degrees above the horizontal). At step #133, C is incremented to #1 and the steps #113 to 132 are repeated, first with C=1, then C=2, and finally with C=3.

When the program returns to step #133 with C set at #3, the following data has been stored:
img_cam_0_0.jpg, img_cam _0_1.jpg ... img_cam _0_15.jpg
sil_cam_0_0.jpg, sil_cam _0_1.jpg ... sil_cam _0_15.jpg
img_cam_1_0.jpg, img_cam _1_1.jpg ... img_cam _1_15.jpg
sil_cam_1_0.jpg, sil_cam _1_1.jpg ... sil_cam _1_15.jpg
img_cam_2_0.jpg, img_cam _2_1.jpg ... img_cam _2_15.jpg
sil_cam_2_0.jpg, sil_cam _2_1.jpg ... sil_cam _2_15.jpg
img_cam_3_0.jpg, img_cam _3_1.jpg ... img_cam _3_15.jpg
sil_cam_3_0.jpg, sil_cam _3_1.jpg ... sil_cam _3_15.jpg

The above description assumes that sixteen images are taken at every orientation of the camera. Of course, more or fewer images can be taken at any orientation. Moreover, a different number of images may be taken at different orientations. This may be of use since it is considered that in order to obtain the optimum three dimensional image with the smallest number of images, more images are required at lower angles than at higher angles relative to the turntable. Accordingly, in one embodiment of the invention, sixteen images are taken with the camera at 10 degrees to the horizontal, 8 images are taken with the camera at 45 degrees to the horizontal, and 4 images are taken with the camera at 80 degrees and at -70 degrees to the horizontal. Also it is not always necessary to take texture images and silhouette images at the same turntable and camera elevation positions. It is considered that having more silhouette image data creates a more accurate geometry shape. However, it is not always necessary to take as many texture images in order to provide the required quality of texture image.

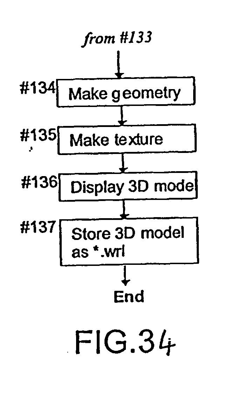

The routine proceeds to step #134 (Figure 34), which step executes the three-dimensional object model creating program 164. The program 164 creates three-dimensional geometry data of the object by using all silhouette images stored in the hard disc unit 160. The three-dimensional geometry is defined by polygons, including triangles and four-cornered polygons. Detailed methods or processes for obtaining the three-dimensional geometry data by using silhouette images taken from different positions and orientations are well known in the art and detailed descriptions of such methods are not repeated here. One suitable method is the method described in US 6,317,139 outlined above.

In the step #134, before creating three-dimensional geometry, camera calibration parameters including photographing positions, orientations, and focal lengths for each of digital cameras and each photographing are calibrated by using the obtained camera information, including the position, the orientation and the focal length of the digital cameras stored in the hard disc unit 160 as files named "cal_large_#C_#N" or "cal_small_#C_#N" in the step #320.

In a step #135, in accordance with the three-dimensional object model creating program 164, the CPU 112 creates texture data to be put on surfaces of each polygon created in the step #134 by using texture images stored in the hard disc unit 160. The additional of textural data to the polygon surfaces completes the three dimensional model. Detailed methods or processes for obtaining the three-dimensional texture data for each polygon by using two-dimensional texture images taken from different positions and orientations are known in the art and are not described in detail here.

In a step #136, the resultant three-dimensional object having geometry on which texture images have been put is displayed on the display of the video monitor 114. As known, such resultant three-dimensional model can be rotated, magnified or like by the user, using the keyboard 120 or the mouse 122.
In a step #137, all information of such a resultant three-dimensional object including three-dimensional geometry information and texture information to be put on the geometry is stored in the hard disc unit 160 as a VRML file, for example. Clearly, any other suitable file format could be used. The process is completed after the step #137.

As noted above, the operator was only required to perform a few simple tasks in order to obtain the required calibration data. Similarly, the operator is only required to perform a few simple operations in order to obtain the image data. The operator must indicate, via GUI 166, the object size (step #105), place the object on the turntable (step #110) and remove the object at the end of the process. Furthermore, the operator is not required to have any photographic experience.

Accordingly, a user with no previous experience of using the photographic apparatus 2 can be trained to make three dimensional models of objects relatively quickly.

It is noted here that although the titling angle of the mirror 23 depends on camera elevation angle and/or on the size of target object in the above embodiment, it is also possible for the object height to be assessed by the operator, and for the height information to be inputted by the operator, with the titling angle being determined on the basis of the information provided by the operator.

It is also noted here that the number of orientations to which the turntable is rotated is always 16 in the embodiment above for every camera arm latitudinal angle, however, it is also possible to have a different number of positions depending on the latitudinal angle of the camera arm or indeed to have a constant number of positions different from 16. When the number of positions is large, for example 32, the geometry quality may well be higher, but performance in capturing the images will be lost.

It is further noted here that the number of marks put on the rim of glass turntable is one in the above embodiment. However, it is possible to use multiple marks, for example, with even angles between them, the number depending on the target positioning accuracy of the turntable desired. (With multiple marks the turntable may be positioned, for example, by rotating it to the nearest mark and rotating it from there by a calibrated number of motor steps - for high accuracy each sector between marks may be calibrated separately, using the method described above.) Putting too many marks at the rim of the glass turntable results the possibility of their appearing in the images taken. (This can result in the marks appearing in the texture of the 3D model). Too many marks is also an unnecessary expense.

It is also noted here the mark(s) may be formed by scratching - for example with a pointed scribe.

It is also noted here, that the rubber roller used as the turntable drive wheel arrangement may be replaced, for example, with material having certain amount of friction with the rim of glass turntable, such as hardened plastic or a metal roller with a ground finish.

Also, optical devices such as an optical prism can be used to deflect the optical axis instead of a mirror.

It is also noted here, that the embodiment described above includes a pair of camera arms and a pair of backlight arms, however, it is also possible to support the backlight unit and camera unit with a single camera arm and a single backlight arm provided that each arm is rigid enough mechanically.

It is further noted here that although in the embodiments described the turntable is brought to a rest before each photograph is taken, the possibility that the object is rotating when it is photographed is not ruled out - if the shutter speed is fast or the speed of rotation is low then the images will not be too degraded.

## Claims

1. A photographing apparatus comprising:
a turntable on which an object to be photographed is set, the turntable having thereon one or more marks indicating its orientation,
a drive for rotating the turntable,
a controller connected to signal the drive to rotate the turntable to particular orientations, and
a sensor connected to indicate to the controller, in response to the one or more marks on the turntable, the position of the turntable,
wherein the controller is arranged to calibrate the orientations of the turntable produced by the drive, by noting occurrence of the one or more marks as indicated by the sensor in relation to signals corresponding to the movement of the drive, and
the controller is arranged to rotate the turntable to particular selected orientations by issuing signals to the drive calculated in accordance with the said noted relation.

2. A photographing apparatus as claimed in claim 1 wherein the drive comprises a stepper motor.

3. A photographing apparatus as claimed in claim 2 wherein the controller, when calibrating, is arranged to note the number of motor steps between the marks.

4. A photographing apparatus as claimed in claim 3 wherein the turntable has exactly one mark to which the sensor responds to indicate the position of the turntable and the controller, when calibrating, is arranged to note the number of motor steps required to rotate the turntable a whole number of rotations as indicated by the occurrence of that mark.

5. A photographing apparatus as claimed in claim 3 or claim 4 wherein the controller, when rotating the turntable to a particular orientation signals the motor to step a number of times that is a multiple or fraction of the noted number of motor steps between marks.

6. A photographing apparatus as claimed in any preceding claim wherein the turntable has exactly one mark to which the sensor responds to indicate the position of the turntable.

7. A photographing apparatus as claimed in any preceding claim wherein the drive comprises a drive wheel which engages the turntable by friction.

8. A photographing apparatus as claimed in claim 7 wherein the drive wheel engages the rim of the turntable.

9. A photographing apparatus as claimed in claim 7 or claim 8 wherein at least the portion of the drive wheel that engages the turntable is made of a resilient material.

10. A photographing apparatus as claimed in any preceding claim wherein the turntable is transparent.

11. A photographing apparatus as claimed in any preceding claim wherein the one or more marks are visible.

12. A photographing apparatus as claimed in claim 11 wherein the sensor detects the marks optically.

13. A photographing apparatus as claimed in any preceding claim wherein the photographing apparatus is arranged to provide from the photographs of the object a three dimensional model of the object.

14. A photographing apparatus as claimed in any preceding claim wherein the controller is arranged to control the drive to bring the turntable to rest at the said selected orientations.

15. A photographing apparatus as claimed in any preceding claim wherein at least one of the selected orientations is one not indicated by the mark or marks.

16. A photographing apparatus as claimed in any preceding claim wherein the controller is arranged to control a camera to take an image of the object on the turntable when the turntable is at a said selected orientation.

17. A photographing apparatus as claimed in any preceding claim wherein the controller is arranged to perform the said calibration of the turntable after each object to be photographed is placed on the turntable.

18. A photographing apparatus comprising:
a camera for photographing an object;
a turntable on which the object is set, the turntable having thereon one or more marks indicating its orientation,
a drive for rotating the turntable,
a controller connected to the drive to rotate the turntable, the controller being capable of setting the turntable at a plurality of particular orientations where the camera photographs the objects,
a sensor for detecting the one or more marks on the turntable to generate a detection signal,
a pulse generator for generating pulses each corresponding to a unit of movement of the drive, and
a counter for counting the pluses, the counter being controlled by the detection signal so as to output a counted value when the detection signal is generated,
wherein the controller is arranged to control the drive to rotate the turntable so as to set the turntable at the particular orientations by using the counted value.

19. A photographing apparatus as claimed in any preceding claim wherein the controller is arranged to make the drive rotate the turntable without making the camera photograph in a calibration mode and to use the counted value output, in the calibration mode, from the counter, and the controller sets the calibration mode for each of objects, which may have different weights.
